# EUROPEAN PATENT APPLICATION

(11) **EP 4 438 786 A1**
(43) Date of publication of application: **02.10.2024**
(21) Application number: 22916404.1
(22) Date of filing: 09.11.2022
(51) Int. Cl.: D06F 33/37, D06F 34/22, D06F 34/18, D06F 39/02, D06F 34/28, G06N 3/08, D06F 103/20, D06F 103/08, D06F 103/12, D06F 105/42

(54) **WASHING MACHINE AND CONTROL METHOD THEREFOR**

(30) Priority: 31.12.2021 KR 20210194506
(71) Applicant: Samsung Electronics Co., Ltd., Suwon-si, Gyeonggi-do 16677 (KR)
(72) Inventor: WOO, Jihyun, Suwon-si Gyeonggi-do 16677 (KR); KANG, Minji, Suwon-si Gyeonggi-do 16677 (KR); KIM, Hyeoncheol, Suwon-si Gyeonggi-do 16677 (KR); BANG, Eunsuk, Suwon-si Gyeonggi-do 16677 (KR); KIM, Hooijoong, Suwon-si Gyeonggi-do 16677 (KR)
(74) Representative: Gulde & Partner
(86) International application number: PCT/KR2022/017551
(87) International publication number: WO 2023/128250

(57) **Abstract**

The present washing machine comprises: a drum; a detergent supply unit for supplying detergent to the drum; a turbidity sensor for detecting the turbidity of water inside the drum; a memory; and a processor which, when a washing cycle starts, causes the detergent supply unit to supply the detergent to the drum, detects the turbidity of water by means of the turbidity sensor when a preset time period elapses after the washing cycle starts, compares the detected turbidity of the water with a threshold value and obtains result information, and stores the obtained result information in the memory.

## Description

### [Technical Field]

The present disclosure relates to a washing machine and a control method therefor, and more particularly, to a washing machine analyzing a user pattern based on a washing cycle history and performing a washing cycle to correspond to the user pattern and a control method therefor.

### [Background Art]

A washing machine may perform a washing cycle by supplying detergent corresponding to a standard mode in case that a user using the washing machine performs the washing cycle in the standard mode (or a basic mode). In addition, the washing machine may include a detergent supply unit (or detergent supply device), and the detergent supply unit may supply a certain amount of detergent.

However, some detergent may be wasted based on a laundry contamination level in case of repeatedly supplying the certain amount of detergent. For example, assume that the washing machine is used by the user who repeatedly washes the laundry such as a towel that has a low contamination level. The certain amount of detergent may be repeatedly wasted by the washing machine mainly washing the laundry having the low contamination level while weighing a lot.

To prevent detergent waste, the washing machine may provide various washing modes (e.g., a rapid mode, a blanket/bedding mode, a towel mode, and a synthetic fiber mode), and the user may select one of the various washing modes. In addition, the washing machine may perform the washing cycle corresponding to the selected mode. However, there is a possibility that the user misidentifies a laundry type, and it may be inconvenient for the user to have to manually set the washing mode.

In addition, the washing machine may prevent the detergent waste by providing a function of adjusting an amount of detergent based on a user input. However, it may be inconvenient for the user to have to adjust the amount of detergent for each washing cycle.

### [Disclosure]

### [Technical Problem]

The present disclosure provides a washing machine which may first perform a first washing cycle and determining whether to perform a second washing cycle by sensing the water turbidity in case of determining that a user uses the washing machine based on a predetermined pattern, and a control method therefor.

### [Technical Solution]

According to an embodiment of the present disclosure, provided is a washing machine including: a drum; a detergent supply unit configured to supply detergent to the drum; a turbidity sensor configured to detect turbidity of water in the drum; a memory; and a processor configured to control the detergent supply unit to supply the detergent to the drum in case that a washing cycle starts, detect the water turbidity by using the turbidity sensor in case that a predetermined time period elapses after the washing cycle starts, obtain result information by comparing the detected water turbidity with a critical value, and store the obtained result information in the memory.

The processor may be configured to obtain a first number, which is the number of washing cycles having the detected water turbidity less than the critical value, based on the result information, in case of receiving a user input for performing the washing cycle, and adjust a supply amount of detergent provided using the detergent supply unit in case that the first number is a critical number or more.

The processor may be configured to perform a first washing cycle by supplying a first amount of detergent by using the detergent supply unit in case that the first number is the critical number or more, and detect the water turbidity by using the turbidity sensor after the predetermined time period elapses after the first washing cycle starts.

The processor may be configured to end the first washing cycle and count the first washing cycle to update the first number in case that the water turbidity is less than the critical value, and perform a second washing cycle by supplying a second amount of detergent by using the detergent supply unit and count the second washing cycle to update a second number which is the number of washing cycles having the detected water turbidity of the critical value or more in case that the water turbidity is the critical value or more.

The processor may be configured to perform a third washing cycle by supplying a third amount of detergent by using the detergent supply unit in case that the first number is less than the critical number.

The processor may be configured to end the first washing cycle in case that the water turbidity is less than a first critical value, perform the second washing cycle by supplying the second amount of detergent by using the detergent supply unit in case that the water turbidity is the first critical value or more and less than a second critical value, and perform a fourth washing cycle by supplying a fourth amount of detergent by using the detergent supply unit in case that the water turbidity is the second critical value or more.

The processor may be configured to end the first washing cycle in case that the water turbidity is less than the first critical value, perform the second washing cycle by supplying the second amount of detergent by using the detergent supply unit in case that the water turbidity is the first critical value or more and less than the second critical value, and perform a fifth washing cycle by supplying the second amount of detergent and a fifth amount of detergent by using the detergent supply unit in case that the water turbidity is the second critical value or more, and the fifth amount of detergent may be a detergent different from the first amount of detergent or the second amount of detergent.

The processor may be configured to perform a first rinsing cycle after ending the first washing cycle in case that the water turbidity is less than the critical value, and perform a second rinsing cycle after ending the second washing cycle in case that the water turbidity is the critical value or more.

The processor may be configured to re-detect the water turbidity by using the turbidity sensor in case that the second washing cycle ends, and provide a guide user interface (UI) for performing an additional washing cycle in case that the re-detected turbidity is the critical value or more.

The processor may be configured to sense at least one of a laundry weight, a laundry volume, a temperature, or a humidity, obtain a probability value for the first washing cycle from an artificial intelligence model by inputting at least one of the laundry weight, the laundry volume, the temperature, or the humidity into the artificial intelligence model stored in the memory, and identify the washing cycle of the washing machine as being performed in a predetermined pattern in case that the obtained probability value is a critical probability value or more, and the artificial intelligence model is trained based on a washing cycle history of a plurality of users that includes history information related to the cycle performed by the washing machine and a first number ratio for each of the plurality of users.

According to another embodiment of the present disclosure, provided is a control method for a washing machine which includes a drum, a detergent supply unit, and a turbidity sensor, the method including: controlling the detergent supply unit to supply detergent to the drum in case that a washing cycle starts; detecting water turbidity by using the turbidity sensor in case that a predetermined time period elapses after the washing cycle starts; obtaining result information by comparing the detected water turbidity with a critical value; and storing the obtained result information.

The method may further include: obtaining a first number, which is the number of washing cycles having the detected water turbidity less than the critical value, based on the result information, in case that a user input for performing the washing cycle is input; and adjusting a supply amount of detergent provided using the detergent supply unit in case that the first number is a critical number or more.

The method may further include performing a first washing cycle by supplying a first amount of detergent by using the detergent supply unit in case that the first number is the critical number or more; and detecting the water turbidity by using the turbidity sensor after the predetermined time period elapses after the first washing cycle starts.

The method may further include: ending the first washing cycle and counting the first washing cycle to update the first number in case that the water turbidity is less than the critical value; and performing a second washing cycle by supplying a second amount of detergent by using the detergent supply unit and counting the second washing cycle to update a second number which is the number of washing cycles having the detected water turbidity of the critical value or more in case that the water turbidity is the critical value or more.

The method may further include performing a third washing cycle by supplying a third amount of detergent by using the detergent supply unit in case that the first number is less than the critical number.

The method may further include: ending the first washing cycle in case that the water turbidity is less than a first critical value; performing the second washing cycle by supplying the second amount of detergent by using the detergent supply unit in case that the water turbidity is the first critical value or more and less than a second critical value; and performing a fourth washing cycle by supplying a fourth amount of detergent by using the detergent supply unit in case that the water turbidity is the second critical value or more.

The method may further include: ending the first washing cycle in case that the water turbidity is less than the first critical value; performing the second washing cycle by supplying the second amount of detergent by using the detergent supply unit in case that the water turbidity is the first critical value or more and less than the second critical value; and performing a fifth washing cycle by supplying the second amount of detergent and a fifth amount of detergent by using the detergent supply unit in case that the water turbidity is the second critical value or more, wherein the fifth amount of detergent is a detergent different from the first amount of detergent or the second amount of detergent.

The method may further include: performing a first rinsing cycle after ending the first washing cycle in case that the water turbidity is less than the critical value; and performing a second rinsing cycle after ending the second washing cycle in case that the water turbidity is the critical value or more.

The method may further include: re-detecting the water turbidity by using the turbidity sensor in case that the second washing cycle ends; and providing a guide user interface (UI) for performing an additional washing cycle in case that the re-detected turbidity is the critical value or more.

The method may further include: sensing at least one of a laundry weight, a laundry volume, a temperature, or a humidity; obtaining a probability value for the first washing cycle from an artificial intelligence model by inputting at least one of the laundry weight, the laundry volume, the temperature, or the humidity into the artificial intelligence model stored in the washing machine; and identifying the washing cycle of the washing machine as being performed in a predetermined pattern in case that the obtained probability value is a critical probability value or more, wherein the artificial intelligence model is trained based on a washing cycle history of a plurality of users that includes history information related to the cycle performed by the washing machine and a first number ratio for each of the plurality of users.

### [Description of Drawings]

FIG. 1 is a block diagram showing a washing machine according to an embodiment of the present disclosure.
FIG. 2 is a block diagram for explaining a specific configuration of the washing machine of FIG. 1.
FIG. 3 is a view for explaining a process in which a module included in a processor uses a turbidity sensor and a memory.
FIG. 4 is a flow chart for explaining operations of performing a washing cycle and a rinsing cycle based on the water turbidity.
FIG. 5 is a flow chart for explaining an operation of updating a washing cycle history.
FIG. 6 is a flow chart for explaining an operation of classifying a normal mode and a low-contamination determination mode from each other.
FIG. 7 is a flow chart for explaining an operation of determining a contamination grade of the washing cycle.
FIG. 8 is a view for explaining an operation of determining an amount of detergent and a washing time period by using an artificial intelligence model.
FIG. 9 is a view for explaining an operation of obtaining a model for determining a low contamination cycle by using the artificial intelligence model.
FIG. 10 is a flow chart for explaining an operation of determining whether to perform a second washing cycle based on the water turbidity.
FIG. 11 is a view for explaining a guide user interface (UI) related to the second washing cycle.
FIG. 12 is a flow chart for explaining an operation of repeatedly checking the water turbidity.
FIG. 13 is a view for explaining an operation of providing a guide UI for an additional washing cycle.
FIG. 14 is a view for explaining the guide UI for the additional washing cycle.
FIG. 15 is a flow chart for explaining an operation of performing a fourth washing cycle based on the water turbidity.
FIG. 16 is a flow chart for explaining an operation of performing a fifth washing cycle based on the water turbidity.
FIG. 17 is a flowchart for explaining an operation of determining whether to perform a second rinsing cycle based on the water turbidity.
FIG. 18 is a flowchart for explaining an operation of determining a first rinsing cycle and the second rinsing cycle based on the water turbidity.
FIG. 19 is a flow chart for explaining an operation of performing the washing cycle and the rinsing cycle based on the water turbidity.
FIG. 20 is a flow chart for explaining an operation of determining detergent and a time period, corresponding to the water turbidity.
FIG. 21 is a view for explaining an operation of changing a critical value based on sensing data.
FIG. 22 is a view for explaining an operation of changing the critical value based on an operation mode of the washing machine or a laundry type.
FIG. 23 is a flowchart for explaining a control method for a washing machine according to another embodiment of the present disclosure.

### [Best Mode]

Hereinafter, the present disclosure is described in detail with reference to the accompanying drawings.

General terms that are currently widely used are selected as terms used in embodiments of the present disclosure in consideration of their functions in the present disclosure, and may be changed based on intentions of those skilled in the art or a judicial precedent, the emergence of a new technique, and the like. In addition, in a specific case, terms arbitrarily chosen by an applicant may exist. In this case, the meanings of such terms are mentioned in detail in corresponding descriptions of the present disclosure. Therefore, the terms used in the present disclosure need to be defined on the basis of the meanings of the terms and the contents throughout the present disclosure rather than simple names of the terms.

In the present disclosure, an expression "have", "may have", "include", "may include", or the like, indicates the existence of a corresponding feature (for example, a numerical value, a function, an operation, or a component such as a part), and does not exclude the existence of an additional feature.

An expression, "at least one of A or/and B" may indicate either "A or B", or "both of A and B."

Expressions "first", "second", and the like, used in the specification may qualify various components regardless of the sequence or importance of the components. The expression is used only to distinguish one component from another component, and does not limit the corresponding component.

In case that any component (for example, a first component) is mentioned to be "(operatively or communicatively) coupled with/to" or "connected to another component (for example, a second component), it is to be understood that any component may be directly coupled to another component or may be coupled to another component through still another component (for example, a third component).

A term of a singular number used herein is intended to include its plural number unless explicitly indicated otherwise. It is to be understood that a term "include", "formed of", or the like used in the application specifies the presence of features, numerals, steps, operations, components, parts, or combinations thereof, mentioned in the specification, and does not preclude the presence or addition of one or more other features, numerals, steps, operations, components, parts, or combinations thereof.

In the embodiments, a "module" or a "-er/-or" may perform at least one function or operation, and be implemented by hardware, software, or a combination of hardware and software. In addition, a plurality of "modules" or a plurality of "~ers/~ors" may be integrated in at least one module and be implemented by at least one processor (not illustrated) except for a "module" or a "-er/or" that needs to be implemented by a specific hardware.

In the present disclosure, a term "user" may refer to a person who uses a washing machine or a device (e.g., an artificial intelligence electronic device) which uses the washing machine.

Hereinafter, embodiments of the present disclosure are described in detail with reference to the accompanying drawings.

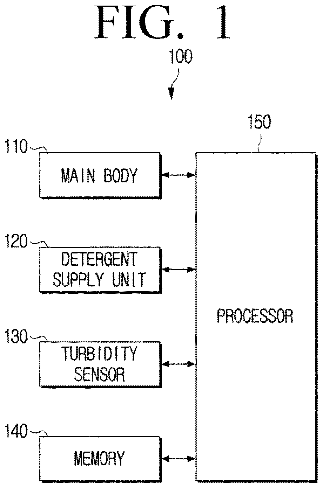

FIG. 1 is a block diagram showing a washing machine 100 according to an embodiment of the present disclosure.

Referring to FIG. 1, the washing machine 100 may include a drum 110, a detergent supply unit 120, a turbidity sensor 130, a memory 140, and a processor 150.

Here, the washing machine 100 may be a device using machine power to wash clothes, or the like.

Here, the drum 110 may have an approximately hollow cylindrical shape and be rotatably installed in a tub 161. An opening corresponding to a laundry inlet of a main body 160 of the washing machine may be disposed on a front surface of the drum 110. A plurality of holes through which water may pass may be disposed in an outer peripheral surface of the drum 110. The drum 110 may be rotated around a horizontal axis by a driving device including a motor 170 installed on its rear surface.

Here, the detergent supply unit 120 may supply detergent stored in a detergent storage to the drum where laundry is stored as the washing machine 100 is driven. The detergent supply unit 120 may be connected to a detergent pipe. The detergent supplied from the detergent supply unit 120 may be mixed with the water and dissolved therein in case that a water supply valve of a water supplier 180 is opened and the water is supplied to the water supply pipe. In addition, the water mixed with the dissolved detergent may be supplied to the drum accommodating the laundry through the water supply pipe.

Here, the turbidity sensor 130 may sense turbidity of water (or muddiness) in the tub 161. Here, the water being sensed may indicate a mixture. For example, the mixture may be a mixture of the dissolved detergent, a contaminant in the laundry, and the water supplied through the water supply pipe. Therefore, the water turbidity may be described as mixed the water turbidity. In addition, the turbidity may be described as a turbidity value.

Here, the turbidity sensor 130 may be implemented as an optical sensor or a current detection sensor. Here, the turbidity sensor 130 implemented in an optical manner may include a light emitter emitting light to the water and a light receiver receiving the light passing through the water. The turbidity sensor 130 implemented in the optical manner may sense (or detect) the water turbidity based on an amount of light. Here, the turbidity sensor 130 implemented in a current detection manner may include a power supplier supplying a current to the water and an ammeter measuring the current passing through the water. The turbidity sensor 130 implemented in the current detection manner may sense (or detect) the water turbidity based on the measured current.

Here, the turbidity sensor 130 may detect liquid turbidity (or a foreign material inclusion level). In detail, the turbidity sensor 130 may detect turbidity of washing water used in the washing cycle, rinsing cycle, or the like of the washing machine 100. For this purpose, the turbidity sensor 130 may include the light emitter (not shown) and the light receiver (not shown). For example, the light emitter may emit the light, and the light receiver may receive the light. The turbidity may be detected from a difference in the amount of light received in case that the light emitted from the light emitter passes through the washing water and is received by the light receiver. Here, the turbidity may be used to determine a laundry washing time period, a laundry soaking time period, a laundry rinsing number, an input amount of detergent, or the like. Here, the washing machine 100 may be determine that the turbidity is higher (or larger) as a sensing value obtained from the turbidity sensor 130 is lower. In addition, the washing machine 100 may be determine that the turbidity is lower (or smaller) as the sensing value obtained from the turbidity sensor 130 is higher.

The memory 140 may be implemented as an internal memory such as a read-only memory (ROM, e.g., electrically erasable programmable read-only memory (EEPROM)) or a random access memory (RAM), included in the processor 150, or as a memory separate from the processor 150. In this case, the memory 140 may be implemented in the form of a memory embedded in the washing machine 100 or in the form of a memory removable from the washing machine 100, based on a data storing purpose. For example, data for driving the washing machine 100 may be stored in the memory embedded in the washing machine 100, and data for an extended function of the washing machine 100 may be stored in the removable memory of the washing machine 100.

Meanwhile, the memory embedded in the washing machine 100 may be implemented as at least one of a volatile memory (e.g., a dynamic RAM (DRAM), a static RAM (SRAM) or a synchronous dynamic RAM (SDRAM)), a non-volatile memory (e.g., one time programmable ROM (OTPROM)), a programmable ROM (PROM), an erasable and programmable ROM (EPROM), an electrically erasable and programmable ROM (EEPROM)), a mask ROM, a flash ROM, a flash memory (e.g., a NAND flash or a NOR flash or the like), a hard drive or a solid state drive (SSD), and the memory removable from the washing machine 100 may be implemented as a memory card (e.g., a compact flash (CF), a secure digital (SD)), a micro secure digital (Micro-SD), a mini secure digital (mini-SD), an extreme digital (xD), a multi-media card (MMC) or the like) or an external memory which may be connected to a universal serial bus (USB) port (e.g., a USB memory), or the like.

Here, the processor 150 may perform an overall control operation of the washing machine 100. In detail, the processor 150 may function to control the overall operation of the washing machine 100.

Here, the processor 150 may be implemented as a digital signal processor (DSP) processing a digital signal, a microprocessor, or a time controller (TCON). However, the processor 150 is not limited thereto. The processor 150 may include one or more of a central processing unit (CPU), a micro controller unit (MCU), a micro processing unit (MPU), a controller, an application processor (AP), a graphics-processing unit (GPU), a communication processor (CP) or an ARM processor, or may be defined by these terms. In addition, the processor 150 may be implemented in a system-on-chip (SoC) or a large scale integration (LSI), in which a processing algorithm is embedded, or may be implemented in the form of a field programmable gate array (FPGA). In addition, the processor 150 may perform various functions by executing computer executable instructions stored in the memory 140.

Meanwhile, the washing machine 100 may include the drum 110, the detergent supply unit 120 supplying the detergent to the drum 110, the turbidity sensor 130 detecting the water turbidity in the drum 110, and the memory 140 storing a washing cycle history.

The processor 150 may detect the water turbidity by using the turbidity sensor 130 in case that a predetermined time period elapses after the washing cycle starts, obtain result information by comparing the detected water turbidity with a critical value, and store the obtained result information in the memory 140.

Here, the result information may be information indicating whether the water turbidity is less than the critical value. The result information may store a predetermined number of result values. The result information may be stored in the memory 140 in the form of an array or a matrix.

For example, the result information may store a first result value (e.g., "1") in case that the water turbidity is less than the critical value. The result information may store a second result value (e.g., "zero") in case that the water turbidity is the critical value or more. The result information may be [1,1,1,1,1,1,1,1,0,0] in case that the water turbidity is less than the critical value 8 times in a row, and the water turbidity is more than the critical value 2 times in a row.

Meanwhile, the processor 150 may obtain a first number, which is the number of washing cycles having the detected water turbidity less than the critical value, based on the result information, in case of receiving a user input for performing the washing cycle, and adjust a supply amount of detergent provided using the detergent supply unit 120 in case that the first number is a critical number or more.

Here, the processor 150 may count the washing cycle having the water turbidity less than the critical value. Here, a value for counting the washing cycle having the water turbidity less than the critical value may be described as the first number. Various descriptions of the first number are described below.

Here, an operation of adjusting the supply amount of detergent provided using the detergent supply unit 120 may indicate performing the washing cycle in the low-contamination determination mode. The low-contamination determination mode may indicate a mode performed to save the detergent, and the description describes its details below.

For example, the processor 150 may obtain the first number, which is the number of washing cycles having the water turbidity less than the critical value, based on the result information [1,1,1,1,1,1,1,1,0,0]. Here, the result information store, as "1", the washing cycle having the water turbidity less than the critical value. Accordingly, the processor 150 may obtain a first number 8 by counting the number of "1" in the result information. Here, assume that the critical number is 7. The first number 8 is the critical number 7 or more, and the processor 150 may adjust the supply amount of detergent provided using the detergent supply unit 120.

Meanwhile, the processor 150 may perform a first washing cycle by supplying a first amount of detergent by using the detergent supply unit 120 in case that the first number is the critical number or more, and detect the water turbidity by using the turbidity sensor 130 after the predetermined time period elapses after the first washing cycle starts.

Here, the description describes a specific operation related to the first washing cycle below.

Meanwhile, the processor 150 may end the first washing cycle and count the first washing cycle to update the first number in case that the water turbidity is less than the critical value, and perform a second washing cycle by supplying a second amount of detergent by using the detergent supply unit 120 and count the second washing cycle to update a second number which is the number of washing cycles having the detected water turbidity of the critical value or more in case that the water turbidity is the critical value or more.

Here, the processor 150 may count the washing cycle having the water turbidity of than the critical value or more. Here, a value for counting the washing cycle having the water turbidity of the critical value or more may be described as the second number. Various descriptions of the second number are described below.

Here, the result information may be updated based on a new washing cycle. In case of obtaining a new result value, the processor 150 may update the result information by deleting the oldest saved result value and storing the new result value.

For example, assume that the water turbidity in the new washing cycle is detected and this the water turbidity is less than the critical value in a state where the result information [1,1,1,1,1,1,1,1,0,0] is stored. Here, the processor 150 may obtain a new result value 1. In addition, the processor 150 may delete the oldest result value 1 and store the new result value 1. The processor 150 may obtain updated result information [1,1,1,1,1,1,1,0,0,1].

Here, the result information is described as including 10 result values, and the result information may store a different number of result values other than 10 based on an implementation example. In addition, in some implementation examples, the result information described above may be described as the result value, "zero" or "1". The result value, "zero" or "1", may also be stored in the form of another value. In addition, the result information may be stored by mapping the result value with date information. Here, the result information may store information where the result value and the date information, on which the result value is obtained, are mapped together. The result information may be stored in a format of [[the result value, date information]]. For example, the result information may be stored as [[1,2021-12-21],[1,2021-12-22],[1,2021-12-23],[1,2021-12-24],[1,2021-12-24],[1,2021-21-24],[1,2021-12-25], [1,2021-12-26],[0,2021-12-27], [0,2021-12-28]].

Here, the result information may be included in the washing cycle history. The result information may include the result value or the date information on whether the water turbidity is less than the critical value. However, the washing cycle history may further include various additional information in addition to the result information. Information on the washing cycle history is described below.

Meanwhile, the processor 150 may perform a third washing cycle by supplying a third amount of detergent by using the detergent supply unit 120 in case that the first number is less than the critical number.

Here, the third washing cycle by supplying the third amount of detergent may indicate performing the washing cycle in the normal mode. The normal mode may indicate a mode including no separate operation to save the detergent, and the description describes its details below.

The description describes that the washing machine 100 in some embodiments performs an operation of adjusting the supply amount of detergent by comparing the first number with the critical number.

The washing machine 100 in other embodiments may adjust the supply amount of detergent by comparing a first number ratio with a critical ratio. Accordingly, an operation related to the first number ratio and the critical ratio described herein may be applied to "the operation of comparing the first number with the critical number." For example, operations S620, S1005, S1205, S1505, S1605, S1705, S1805, S1905, S2005, or the like may be replaced with a step of "identifying whether the first number is the critical number or more."

Here, the processor 150 may performs the washing cycle using the detergent supply unit 120 based on the user input in case of receiving the user input for the washing cycle, detect the water turbidity by using the turbidity sensor after the predetermined time period elapses after the washing cycle starts, count the washing cycle as the first number and store the first number in the memory 140 in case that the water turbidity is less than the critical value, and store the second number in the memory 140 by counting the washing cycle as the second number in case that the water turbidity is the critical value or more.

Here, the processor 150 may detect (or sense) the water turbidity by using the turbidity sensor 130 after performing the washing cycle.

The processor 150 may determine whether the washing cycle is a low-contamination washing cycle or a high-contamination (or general contamination) washing cycle based on the detected water turbidity. Here, the low-contamination washing cycle may indicate a washing cycle having the water turbidity less than the critical value. Here, the high-contamination (or general contamination) washing cycle may indicate a washing cycle having the water turbidity of the critical value or more.

The turbidity sensor 130 may sense the received light differently based on a water turbidity level. Accordingly, the processor 150 may be determine that the turbidity is higher (or larger) as the sensing value obtained from the turbidity sensor 130 is lower. In addition, the processor 150 may be determine that the turbidity is lower (or smaller) as the sensing value obtained from the turbidity sensor 130 is higher.

Meanwhile, the processor 150 may detect the water turbidity after performing the washing cycle (or after the predetermined time period elapses after the washing cycle starts). In addition, the processor 150 may count the low-contamination washing cycle based on the water turbidity. The description describes the number at which the low-contamination washing cycle is performed as the first number, and describes the washing cycle which is not the low-contamination washing cycle as the second number.

The processor 150 may determine whether each washing cycle performed is the low-contamination washing cycle and count the first number or the second number. In addition, the processor 150 may update the first number or the second number. Here, the processor 150 may store the washing cycle history, including the first number and the second number, in the memory 140.

Here, the first number may be described as first number information and the second number may be described as second number information. In addition, the first number may be described as first count information and the second number may be described as second count information. In addition, the first number may be described as a first accumulated value and the second number may be described as a second accumulated value. In addition, the first number may be described as first information and the second number may be described as second information.

Here, the washing cycle history may include at least one of information indicating whether the washing cycle is the low-contamination washing cycle, information on a time period in which the washing cycle is performed, an amount of detergent used in the washing cycle, an execution time period of the washing cycle, and a laundry weight.

Meanwhile, the processor 150 may control the washing cycle based on the first number ratio among a total number of washing cycles performed during a predetermined period in case of receiving the user input for the washing cycle.

Here, the processor 150 may control the washing cycle based on the first number and the second number, stored in the memory 140. In detail, the processor 150 may obtain the first number ratio.

In some embodiments, the processor 150 may obtain the first number ratio based on information stored within the predetermined period among the first number and the second number, stored in the memory 140. For example, the processor 150 may obtain the first number ratio based on the washing cycle history stored for a week (i.e., the predetermined period).

In other embodiments, the processor 150 may obtain the first number ratio based on a predetermined number among the first number and the second number, stored in the memory 140. For example, the processor 150 may obtain the first number ratio based on the last 10 number (or the predetermined number) of the washing cycles.

Meanwhile, the processor 150 may perform the first washing cycle by supplying the first amount of detergent by using the detergent supply unit 120 in case that the first number ratio among the total number of washing cycles performed during the predetermined period is the critical ratio or more, and detect the water turbidity by using the turbidity sensor in case that the predetermined time period elapses after the first washing cycle starts.

For example, assume that the first number is 8 times, the second number is 2 times, and the critical ratio is 0.7. The processor 150 may calculate the total number of 10 times by adding the first number of 8 times and the second number of 2 times. In addition, the processor 150 may obtain the first number ratio of 0.8 by dividing the first number of 8 times by the total number of 10 times. In addition, the processor 150 may identify whether the first number ratio of 0.8 is more than the critical ratio of 0.7. Here, the first number ratio of 0.8 is more than the critical ratio of 0.7, and the processor 150 may thus determine to perform the first washing cycle.

Meanwhile, the processor 150 may end the first washing cycle and count the first washing cycle as the first number to update the first number in case that the water turbidity is less than the critical value, perform the second washing cycle by supplying the second amount of detergent by using the detergent supply unit 120 in case that the water turbidity is the critical value or more, and count the second washing cycle as the second amount to update the second number.

The processor 150 may determine whether to perform the first washing cycle by obtaining the first number ratio in case of identifying that the washing machine 100 or a user of the washing machine 100 has a predetermined pattern. Meanwhile, the processor 150 may detect the water turbidity by using the turbidity sensor 130 and update the first number or the second number in case that the washing cycle is completed regardless of whether the first number ratio is the critical ratio or more.

Here, the predetermined pattern may indicate a pattern in which the user frequently uses the low-contamination washing cycle. Here, the low-contamination washing cycle may indicate a cycle where a contamination level is relatively low and a small amount of detergent is used. The low-contamination washing cycle may be described as the first washing cycle. Here, the predetermined pattern may be described as a low-contamination washing pattern.

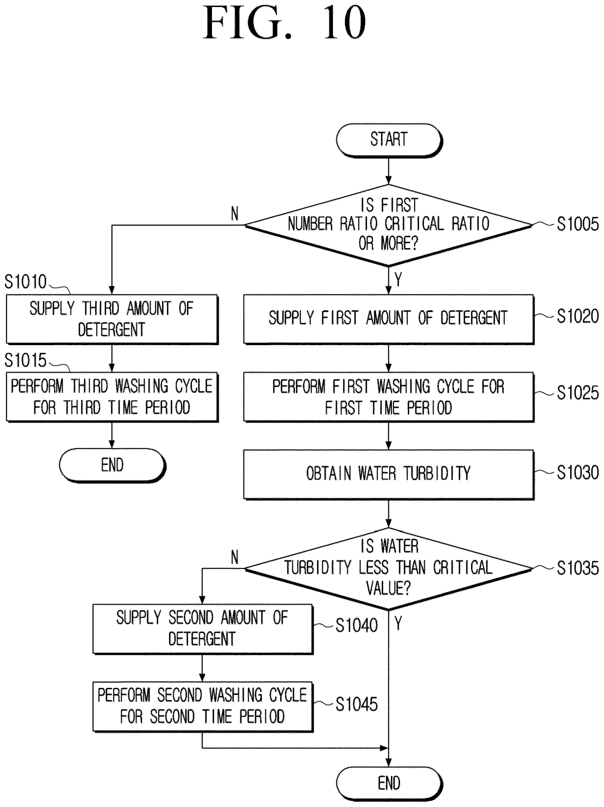

Here, the predetermined pattern may indicate a pattern in which the first number ratio, at which the washing cycle having the turbidity less than the critical value is performed, is the critical ratio or more. In addition, the predetermined pattern may indicate a pattern in which a ratio of using only the low-contamination washing cycle (or the washing cycle having the turbidity less than the critical value) is the critical ratio or more. That is, the predetermined pattern may indicate that a pattern, in which only the first washing cycle is used in a step S1025 of FIG. 10 without using the second washing cycle of a step S1045 of FIG. 10, is identified by the critical ratio or more.

Here, the processor 150 may identify whether the user of the washing machine 100 has the predetermined pattern. Here, the processor 150 may perform the washing cycle in the low-contamination determination mode in case of identifying that the user of the washing machine 100 uses the washing machine 100 based on the predetermined pattern. Here, the low-contamination determination mode may indicate a mode where the laundry contamination level is determined and a detailed setting of the washing cycle is adjusted. Here, the low-contamination determination mode may be described as a predetermined mode or an economy mode.

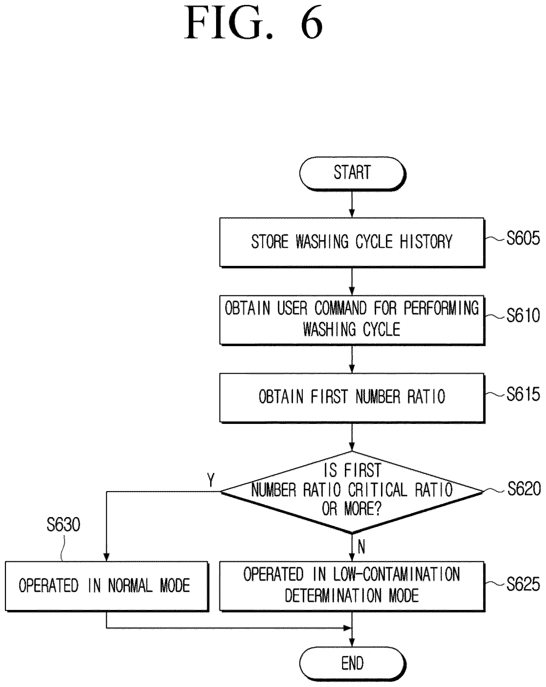

Here, the processor 150 may perform the washing cycle in the normal mode in case of identifying that the user of the washing machine 100 does not use the washing machine 100 based on the predetermined pattern. Here, the normal mode may indicate a mode where one washing cycle is performed without performing an additional washing cycle. In addition, the normal mode may be described as a first mode and the low-contamination determination mode may be described as a second mode. The description describes operations related to the low-contamination determination mode and the normal mode with reference to FIG. 6.

In addition, the processor 150 may set the critical value for counting the first number and the second number to be different from each other based on the normal mode (or the first mode) or the low-contamination determination mode (or the second mode). For example, the critical value may use a first critical value in case that the first number and the second number are counted in the normal mode (or the first mode). In addition, the critical value may use a second critical value in case that the first number and the second number are counted in the low-contamination determination mode (or the second mode). Here, the second critical value may be more than the first critical value.

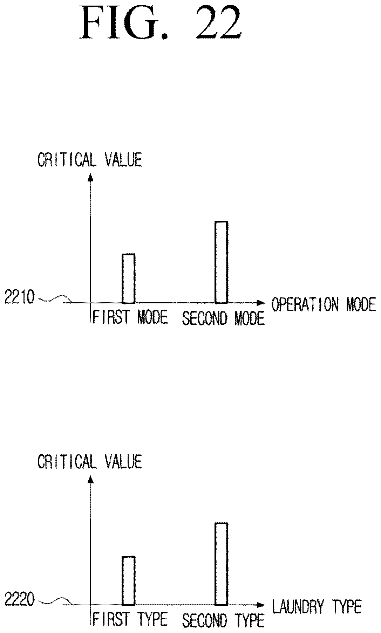

The reason is that an amount of water supplied in the normal mode (or the first mode) may be more. In case that the amount of water is a lot, the processor 150 may sense different the water turbidity even in laundry having the same contamination level. To reflect this point, the processor 150 may count the first number and the second number by using the first critical value in the normal mode (or the first mode), and count the first number and the second number by using the second critical value (more than the first critical value) in the low-contamination determination mode (or the second mode). A description thereof is described with reference to FIG. 22.

Here, the processor 150 may perform the first washing cycle by supplying the first amount of detergent by using the detergent supply unit 120 in case of performing the washing cycle in the low-contamination determination mode. Here, the first washing cycle may be a cycle where the first amount of detergent is supplied and washing is performed for a first time period. Here, the first amount may indicate an amount of detergent that is injected assuming that the laundry contamination level is relatively low.

Here, the processor 150 may sense the water turbidity by using the turbidity sensor 130 in case of identifying a predetermined event. Here, the water may indicate stagnant water in the drum 110. In detail, the water may exist in the tub 161 connected to the drum 110. In addition, the turbidity sensor 130 may sense the turbidity of the water existing in the tub 161. The water turbidity may have a higher value as the laundry contamination level is more severe. Here, the water turbidity may be briefly described as the turbidity.

Here, the water being sensed may indicate the mixture. For example, the mixture may be the mixture of the dissolved detergent, the contaminant in the laundry, and the water supplied through the water supply pipe. Therefore, the water turbidity may be described as the mixed water turbidity.

Here, the processor 150 may analyze the water turbidity sensed using the turbidity sensor 130. In addition, the processor 150 may determine whether to perform the additional washing cycle based on the water turbidity. The lower the water turbidity or a water turbidity value, the lower a water contamination level.

The processor 150 may determine as requiring no additional cycle in case that the water turbidity is less than the critical value. Therefore, the processor 150 may end the first washing cycle. The processor 150 may perform no additional cycle after the first washing cycle if the current first washing cycle is already ended.

The processor 150 may determine as requiring the additional cycle in case that the water turbidity is the critical value or more. Therefore, the processor 150 may perform the first washing cycle and further perform the second washing cycle. The processor 150 may perform the second washing cycle if the current first washing cycle ends.

In some embodiments, the predetermined event may be an event where the predetermined time period elapses after the first washing cycle starts. Here, the processor 150 may immediately end the first washing cycle in case that the water turbidity is less than the critical value. In addition, the processor 150 may perform the first washing cycle for a remaining time period, and perform the second washing cycle after the first washing cycle ends in case that the water turbidity is the critical value or more.

In other embodiments, the predetermined event may be an event where the first washing cycle ends. Here, the processor 150 may perform no additional washing cycle in case that the water turbidity is less than the critical value. In addition, the processor 150 may perform the second washing cycle in case that the water turbidity is the critical value or more.

The description describes details of the first washing cycle and the second washing cycle with reference to FIG. 10.

Here, the processor 150 may determine whether the user uses the washing machine 100 in the predetermined pattern based on the first number ratio of the user that is stored in the memory 140. Here, the predetermined pattern may indicate a pattern in which a ratio of the washing cycle having the turbidity less than the critical value among the plurality of washing cycles used by the user is the critical ratio or more.

Here, the first washing cycle may be a washing cycle used to wash the laundry having a relatively low contamination level. In detail, the processor 150 may classify the laundry contamination levels into a plurality of grades. For example, the processor 150 may classify the laundry as having grades 1 to 10 based on its contamination level. Here, the higher the contamination level, the higher the grade. Here, a critical grade may be a grade 3. Here, the first washing cycle may be a cycle used to wash the laundry having the contamination level less than the critical grade (e.g., the grade 3).

Here, the processor 150 may first perform the first washing cycle regardless of the laundry contamination level. The processor 150 may determine the laundry as having the contamination level less than the critical grade in case that the laundry is thoroughly washed in the first washing cycle. The processor 150 may determine how much the laundry is washed based on the water turbidity obtained using the turbidity sensor 130. In detail, the processor 150 may obtain the water turbidity by using the turbidity sensor 130 after the predetermined time period elapses after the first washing cycle starts. In addition, the processor 150 may determine the laundry contamination level based on the water turbidity.

Here, the description further describes the first number ratio with reference to FIG. 6.

Meanwhile, the processor 150 may identify whether the washing cycle of the washing machine 100 is performed in the predetermined pattern based on the washing cycle history corresponding to date and time information.

Here, the processor 150 may obtain the date and time information in real time. Here, the date and time information may indicate the date information and time information. For example, the date information may include at least one of date data, day of the week information, information on whether the corresponding day is a weekend, or public holiday information. In addition, the time information may include time data.

Here, the washing cycle history corresponding to the date and time information may indicate the washing cycle history corresponding to the date and time information currently obtained (or recognized) by the washing machine 100 among the washing cycle history.

Here, the washing cycle history may indicate history information related to the cycle performed by the washing machine 100. The washing cycle history may include information indicating how the laundry is washed. For example, the washing cycle history may include at least one of laundry date and time information, the laundry weight, a laundry volume, a temperature, a humidity, the amount of detergent supplied for the washing cycle, or a time period required for the washing cycle. The washing cycle history may be stored in the memory 140.

As an example, the processor 150 may filter the washing cycle history based on the day of the week information among the date and time information. The processor 150 may extract (or obtain) the washing cycle history corresponding to a currently-obtained day of the week among a total washing cycle history, and identify the predetermined pattern based on the extracted washing cycle history.

As another example, the processor 150 may filter a washing cycle calendar based on the time data among the date and time information. The processor 150 may classify time groups based on the time data. The processor 150 may set 06:00 to 12:00 as a first group, 12:00 to 18:00 as a second group, and 18:00 to 24:00 as a third group. Here, if a current time is 09:00, the processor 150 may extract (or obtain) the washing cycle history identified as the first group and identify the predetermined pattern based on the extracted washing cycle history.

Here, the processor 150 may analyze the washing cycle history to identify whether the user uses the washing machine 100 in the predetermined pattern. Here, the processor 150 may analyze only the washing cycle history stored in the predetermined period among the entire washing cycle history.

For example, the predetermined period may be the most recent month. A user usage pattern may be changed, and the processor 150 may thus check the user pattern based on the washing cycle history stored in the predetermined period (the most recent month).

Here, the processor 150 may perform the washing cycle corresponding to the water turbidity in case of sensing the water turbidity. In addition, the processor 150 may store the washing cycle performance result information. In addition, the processor 150 may update the washing cycle history by reflecting the stored result information to the washing cycle history.

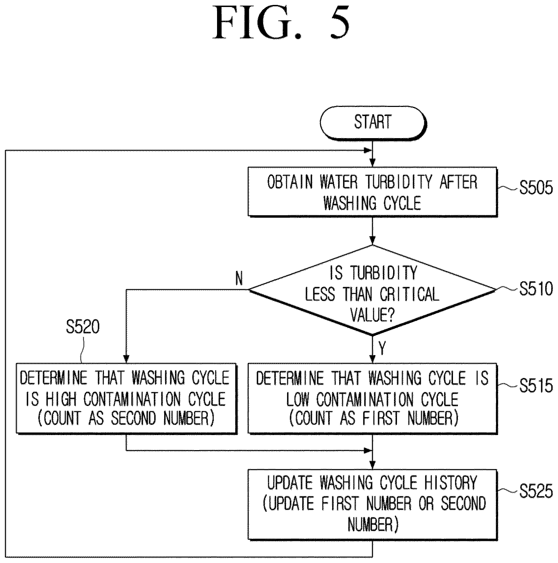

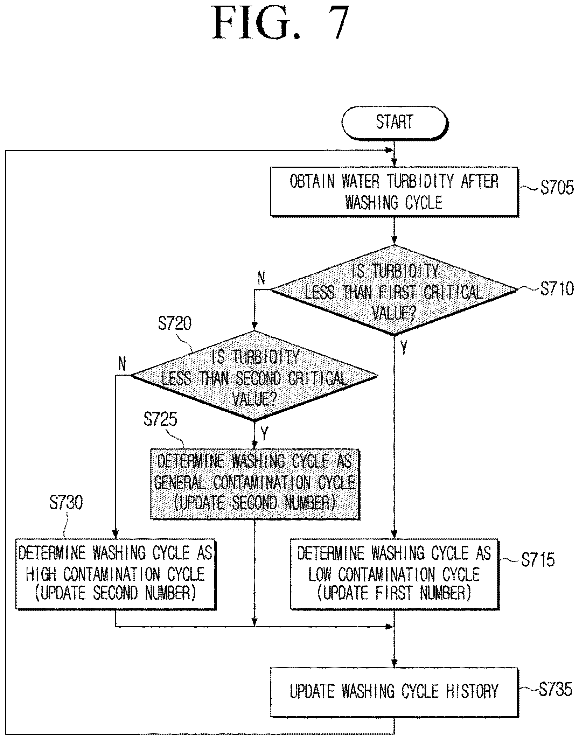

The description describes an operation of updating the washing cycle history with reference to FIGS. 5 and 7.

Meanwhile, the processor 150 may perform the third washing cycle by supplying the third amount of detergent by using the detergent supply unit 120 in case that the first number ratio among the total number of washing cycles performed during the predetermined period is less than the critical ratio.

Here, the processor 150 may obtain the first number ratio at which the washing cycle having the turbidity less than the critical value is performed. In addition, the processor 150 may determine whether to be operated in the normal mode or the low-contamination determination mode based on the first number ratio. Here, the processor 150 may perform the washing cycle in the normal mode in case that the first number ratio is less than the critical ratio. In detail, the processor 150 may perform the third washing cycle by supplying the third amount of detergent. Here, the third amount may be more than the first amount. Therefore, the first washing cycle using the first amount may be more likely to save the detergent than the third washing cycle using the third amount. The description further describes the third washing cycle in steps S1005, S1010, and S1015 of FIG. 10.

Meanwhile, the processor 150 may perform the washing cycle in the low-contamination determination mode in case that the first number ratio is the critical ratio or more. In detail, the processor 150 may perform the first washing cycle and sense the water turbidity. In addition, the processor 150 may determine whether to perform the additional washing cycle by analyzing the water turbidity.

Meanwhile, the processor 150 may end the first washing cycle in case that the water turbidity is less than the first critical value, perform the second washing cycle by supplying the second amount of detergent by using the detergent supply unit 120 in case that the water turbidity is the first critical value or more and less than the second critical value, and perform a fourth washing cycle by supplying a fourth amount of detergent by using the detergent supply unit 120 in case that the water turbidity is the second critical value or more.

Here, the processor 150 may determine one of three operations based on the water turbidity in relation to the first critical value or the second critical value.

The processor 150 may determine that the laundry is thoroughly washed in case that the water turbidity is less than the first critical value. Therefore, the processor 150 may perform no additional washing cycle. The processor 150 may stop a remaining cycle of the first washing cycle and end the washing cycle in case that the first washing cycle is not ended. The processor 150 may perform no additional washing cycle any longer in case that the first washing cycle ends.

The processor 150 may determine that the laundry washing is not ended in case that the water turbidity is the first critical value or more and less than the second critical value. Therefore, the processor 150 may further perform the second washing cycle. Here, the second washing cycle may indicate a cycle where the washing is performed for a second time period by using the second amount of detergent. The laundry may not be thoroughly washed in the first washing cycle, and the processor 150 may further wash the laundry through the second washing cycle.

The processor 150 may determine that the laundry washing is not ended and it is necessary to perform a washing cycle with an amount more than the second amount in case that the water turbidity is the second critical value or more. In detail, the processor 150 may perform the fourth washing cycle by using the fourth amount of detergent. Here, the fourth washing cycle may be a cycle where the washing is performed for a fourth time period by using the fourth amount of detergent. Here, the fourth amount may be more than the second amount.

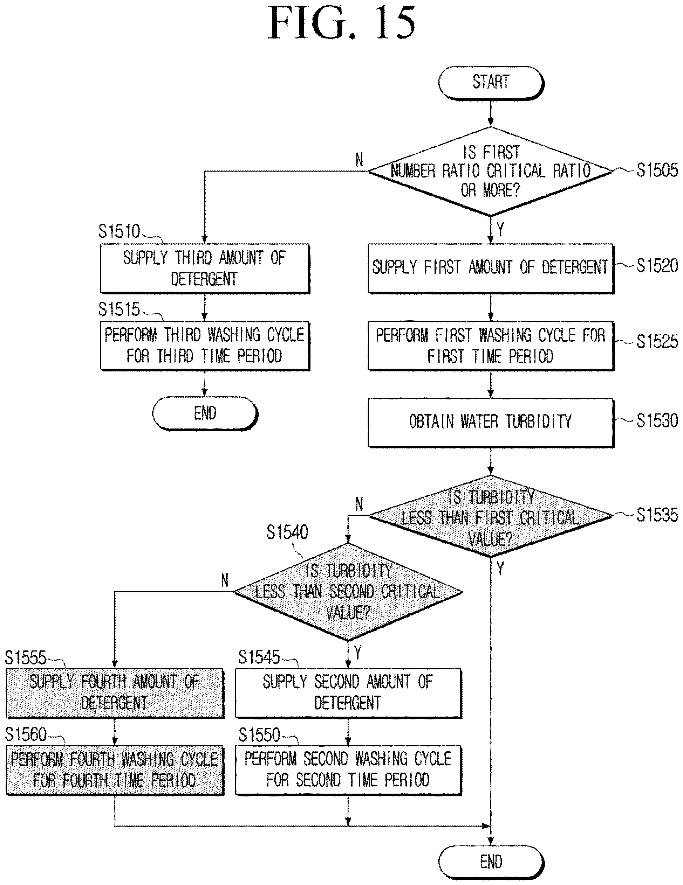

The description describes an operation related to the fourth washing cycle with reference to FIG. 15.

Meanwhile, the processor 150 may end the first washing cycle in case that the water turbidity is less than the first critical value, perform the second washing cycle by supplying the second amount of detergent by using the detergent supply unit 120 in case that the water turbidity is the first critical value or more and less than the second critical value, and perform a fifth washing cycle by supplying the second amount of detergent and a fifth amount of detergent by using the detergent supply unit 120 in case that the water turbidity is the second critical value or more, and the fifth amount of detergent may be a detergent different from the first amount of detergent or the second amount of detergent.

The processor 150 may perform the fifth washing cycle instead of performing the fourth washing cycle in case that the water turbidity is the second critical value or more. Here, the fifth washing cycle may indicate a cycle where the washing is performed for a fifth time period by using the second amount of detergent and the fifth amount of detergent. Here, the fifth amount of detergent may be of a type different from the first amount of detergent or the second amount of detergent. Here, the first amount of detergent or the second amount of detergent may be described as a first detergent (or a first type detergent), and the fifth amount of detergent may be described as a second detergent (or a second type detergent). Here, the second detergent may indicate a detergent having a better ability to wash the contamination level than the first detergent. For example, the second detergent may indicate a detergent having a higher cleaning ability than the first detergent.

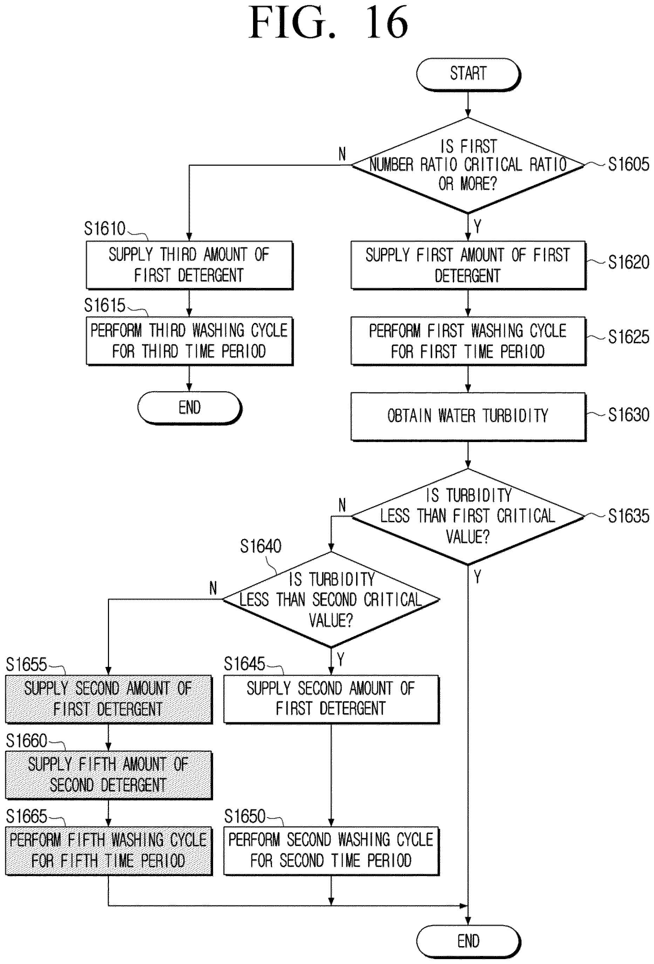

The description describes an operation related to the fifth washing cycle with reference to FIG. 16. Meanwhile, an operation of supplying the second amount of detergent may be omitted in some implementation examples.

Meanwhile, the processor 150 may perform a first rinsing cycle after ending the first washing cycle in case that the water turbidity is less than the critical value, and perform a second rinsing cycle after ending the second washing cycle in case that the water turbidity is the critical value or more.

Here, the processor 150 may perform the rinsing cycle after the washing cycle ends. The processor 150 may determine whether to perform the first rinsing cycle or the second rinsing cycle based on the water turbidity in the low-contamination determination mode. The first rinsing cycle and the second rinsing cycle may be different from each other in at least one of a water supply amount or a rinsing number.

For example, the first rinsing cycle may be a cycle where a first amount of water is supplied and a first number of rinsing is performed. In addition, the second rinsing cycle may be a cycle where a second amount of water is supplied and a second number of rinsing is performed. Here, the second amount may be more than the first amount. In addition, the second number may be larger than the first number.

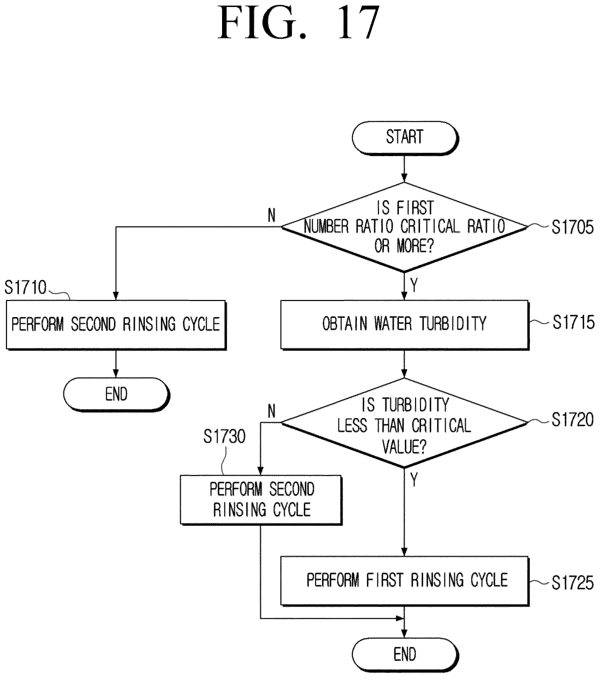

The description further describes the rinsing cycle with reference to FIGS. 17 to 19.

Meanwhile, the processor 150 may detect the water turbidity after the washing cycle ends. In addition, the processor 150 may determine whether to perform the additional washing cycle based on the water turbidity. Here, the processor 150 may provide a guide user interface (UI) for performing the additional washing cycle. Here, an operation of providing the guide UI may be an operation of displaying a guide image through a display (not shown) or outputting guide audio through a speaker (not shown).

A time point at which the guide UI is displayed may be different.

In some embodiments, the processor 150 may provide the guide UI at all stages of performing the additional washing cycle. The processor 150 may provide the guide UI in case that the additional washing is required after the first washing cycle. The processor 150 may detect the water turbidity by using the turbidity sensor 130 in case that the first washing cycle ends, and provide the guide UI for performing the additional washing cycle (or the second washing cycle) in case that the detected turbidity is greater than the critical value.

In other embodiments, the processor 150 may provide the guide UI in case of requiring additional washing even after performing both the first washing cycle and the second washing cycle.

Meanwhile, the processor 150 may re-detect the water turbidity by using the turbidity sensor 130 in case that the second washing cycle ends, and provide the guide UI for performing the additional washing cycle in case that the re-detected turbidity is the critical value or more.

Here, the processor 150 may determine the first washing cycle and the second washing cycle as the basic washing cycle, and may output the guide UI for the additional washing cycle performed after the basic washing cycle.

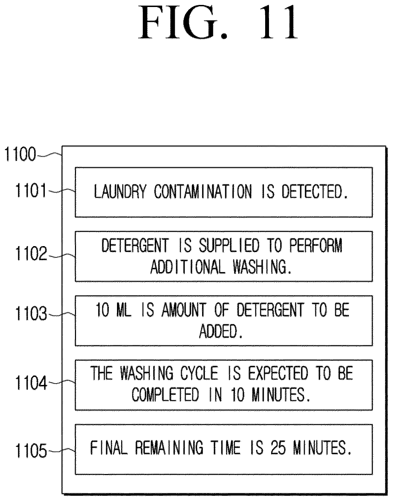

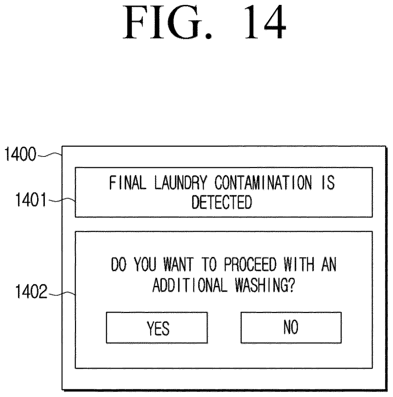

Meanwhile, the guide UI may indicate at least one of a guide UI including information related to the additional washing cycle or a guide UI including information querying whether to perform the additional washing cycle. The description describes the guide UI including the information related to the additional washing cycle with reference to FIG. 11. In addition, the description describes the guide UI including information querying whether to perform the additional washing cycle is described with reference to FIG. 14.

Meanwhile, the processor 150 may sense at least one of the laundry weight, the laundry volume, the temperature, or the humidity, obtain a probability value for the first washing cycle from an artificial intelligence model by inputting at least one of the laundry weight, the laundry volume, the temperature, or the humidity into the artificial intelligence model stored in the memory 140, and identify the washing cycle of the washing machine 100 as being performed in the predetermined pattern in case that the obtained probability value is a critical probability value or more. Here, the artificial intelligence model may be trained based on the washing cycle history of the plurality of users that includes history information related to the cycle performed by the washing machine 100 and the first number ratio for each of the plurality of users.

Here, an artificial intelligence model 900 may be described as a neural network model. In addition, the artificial intelligence model 900 may here be trained based on the washing cycle history corresponding to each of the plurality of users and the first number ratio corresponding to each of the plurality of users. Here, the first number ratio may indicate a ratio in which the washing cycle having the turbidity less than the critical value among the plurality of washing cycles is performed by the washing machine. In addition, the first number ratio may correspond to each of the plurality of users. For example, the first number ratio may exist in the washing machine 100 used by a first user, and the first number ratio may exist in the washing machine 100 used by a second user.

Here, the processor 150 may store the trained artificial intelligence model 900 in the memory 140, and predict the user pattern using the washing machine 100 by using the trained artificial intelligence model 900. In detail, the processor 150 may input the washing cycle history of the user using the washing machine 100 into the artificial intelligence model 900 to obtain the probability value used for the first washing cycle. In addition, the processor 150 may identify whether the washing cycle of the washing machine is performed in the predetermined pattern based on the obtained probability value.

In detail, the processor 150 may identify that the washing cycle of the washing machine 100 is performed in the predetermined pattern, and perform the washing cycle in the low-contamination determination mode in case that the probability value is the critical probability value or more. In addition, the processor 150 may identify that the washing cycle of the washing machine 100 is not performed in the predetermined pattern, and perform the washing cycle in the normal mode in case that the probability value is less than the critical probability value. In addition, the first number ratio may indicate a low-contamination washing cycle ratio.

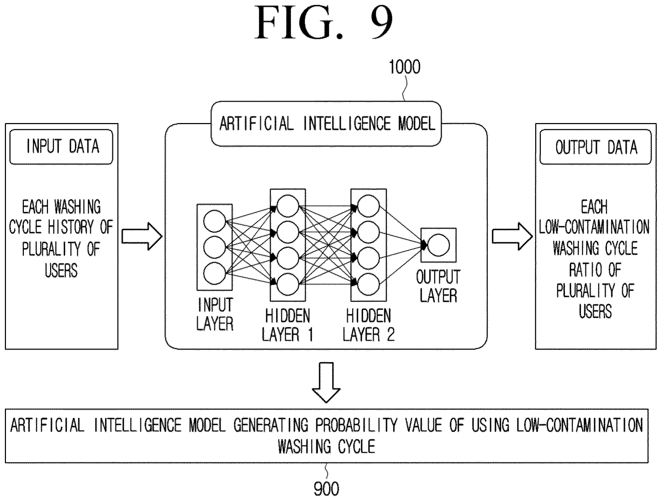

Here, the description further describes the artificial intelligence model 900 with reference to FIG. 9.

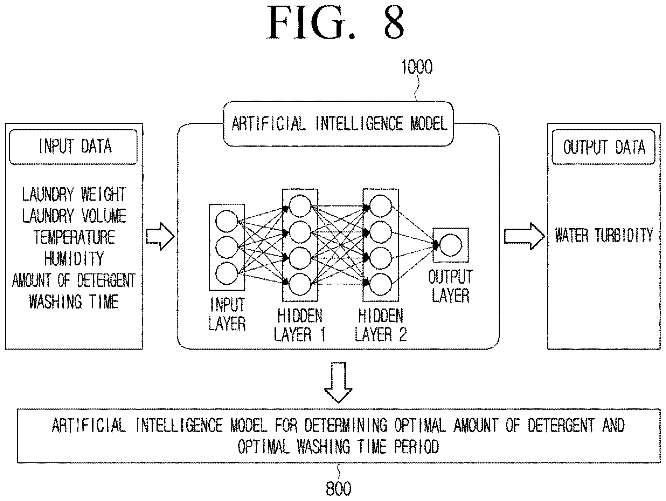

Meanwhile, the processor 150 may determine at least one of the appropriate amount of detergent or washing time period for the laundry by using an artificial intelligence model 800. A description thereof is described with reference to FIG. 8.

Meanwhile, the washing machine 100 may check the user usage pattern and provide a washing cycle appropriate for the usage pattern. The washing machine 100 may provide improved user convenience in performing the appropriate washing cycle automatically even in case that the user does not select the cycle. In particular, the washing machine 100 may provide the user with the most appropriate washing cycle without wasting the detergent based on an algorithm that reflects the washing cycle history of the user.

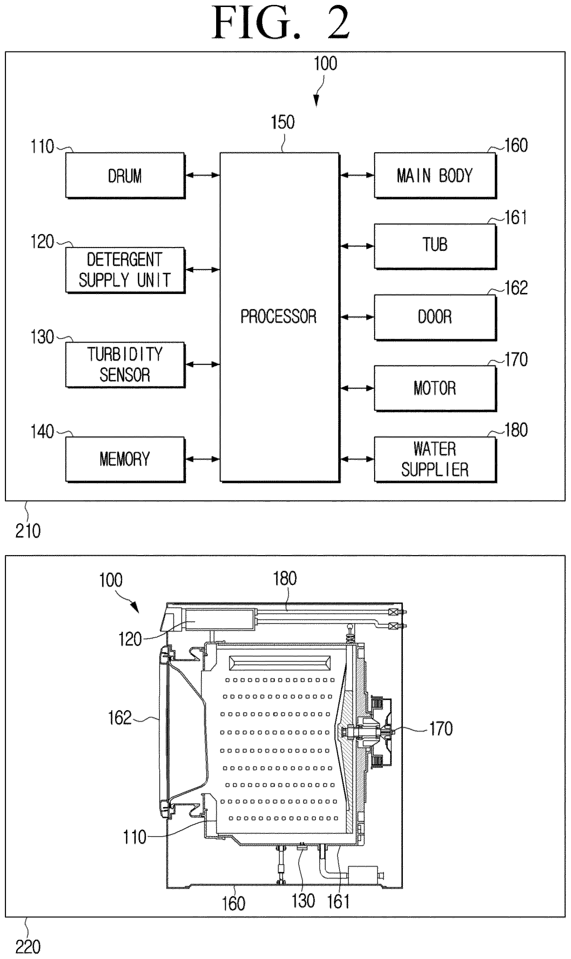

Meanwhile, the description hereinabove illustrates and describes only a simple configuration configuring the washing machine 100, and various configurations may be further provided in case of its implementation. This case is described below with reference to FIG. 2.

FIG. 2 is a block diagram for explaining a specific configuration of the washing machine 100 of FIG. 1.

Referring to an embodiment 210 of FIG. 2, the washing machine 100 may include the drum 110, the detergent supply unit 120, the turbidity sensor 130, the memory 140, the processor 150, the main body 160, the tub 161, a door 162, the motor 170, and the water supplier 180.

Meanwhile, omitted are redundant descriptions of the same operations as those described above among the operations of the drum 110, the detergent supply unit 120, the turbidity sensor 130, the memory 140, and the processor 150.

The main body 160 may form an exterior of the drum washing machine 100 and have a approximately rectangular parallelepiped shape. The main body 160 may include a front frame, a rear frame, a left frame, a right frame, an upper frame, and a lower frame.

The laundry inlet may be disposed on the front frame of the main body 160 for putting the laundry in and out of the main body 160. The door 162 may be installed on the laundry inlet to be opened and closed. A control panel capable of controlling the washing machine 100 may be disposed on an upper part of the front frame of the main body 160. The control panel may include a plurality of buttons for controlling the washing machine 100, the display for displaying information related to the washing machine 100 and a washing process, and the processor 150 controlling the washing machine.

The tub 161 may be installed in the main body 160 of the washing machine 100, and have a shape of a hollow cylinder having an opening disposed toward the laundry inlet of the front frame. The tub 161 may store a predetermined amount of water necessary for the washing. The water supplier 180 supplying the water to the tub 161 may be disposed at an upper part of the tub 161, and a drainage device draining the water from the tub 161 to the outside may be disposed at a lower part of the tub 161.

In case of being installed on the laundry inlet, the door 162 may be formed on the front frame of the main body 160.

The motor 170 may rotate the drum where the laundry is accommodated. Power from the motor 170 may be applied to generate a driving force, and the motor 170 may transfer the generated driving force to a pulsator alone or to the drum and the pulsator simultaneously. In addition, the motor 170 may receive a driving control signal generated by the processor 150 and drive the detergent supply unit 120 for the detergent included in the detergent supply unit 120 to be supplied to the drum where the laundry is accommodated. In addition, the motor 170 may receive the driving control signal generated by the processor 150 and drive the water supplier 180 for the washing water to be supplied into the drum, or drive a drainage part for the washing water accommodated in the drum to be discharged outside the washing machine 100.

The water supplier 180 may include the water supply pipe connected to an external water supply source (not shown) and the water supply valve for opening and closing the water supply pipe. The water supply pipe may have one end connected to a bubble generator (not shown) described below. A detergent suction part may be disposed at the water supply pipe.

The speaker (not shown) may be a component outputting not only various audio data but also various notification sounds or voice messages.

A microphone (not shown) may be a component receiving a user voice or other sounds and converting the same to the audio data. The microphone (not shown) may receive the user voice while being activated.

A communication interface (not shown) is a component performing communication with various types of external devices in various types of communication manners. The communication interface (not shown) may include a wireless communication module or a wired communication module. Here, each communication module may be implemented in the form of at least one hardware chip.

Here, a wireless communication module may be a module communicating with the external device in a wireless manner. For example, the wireless communication module may include at least one of a wireless fidelity (Wi-Fi) module, a Bluetooth module, an infrared communication module, or another communication module.

Here, a wired communication module may be a module communicating with the external device in a wired manner. For example, the wired communication module may include at least one of a local area network (LAN) module, an Ethernet module, a pair cable, a coaxial cable, an optical fiber cable, or an ultra wide-band (UWB) module.

The display (not shown) may be implemented as various types of displays such as a liquid crystal display (LCD), an organic light emitting diode (OLED) display, a plasma display panel (PDP). The display (not shown) may also include a driving circuit, a backlight unit or the like, which may be implemented in a form such as a-si thin film transistor (TFT), a low temperature poly silicon (LTPS) TFT, an organic TFT (OTFT). Meanwhile, the display (not shown) may be implemented as a touch screen combined with a touch sensor, a flexible display, a three-dimensional (3D) display, or the like. In addition, the display (not shown) according to an embodiment of the present disclosure may include not only a display panel outputting an image, but also a bezel housing the display panel. In particular, the bezel according to an embodiment of the present disclosure may include a touch sensor (not shown) detecting user interaction.

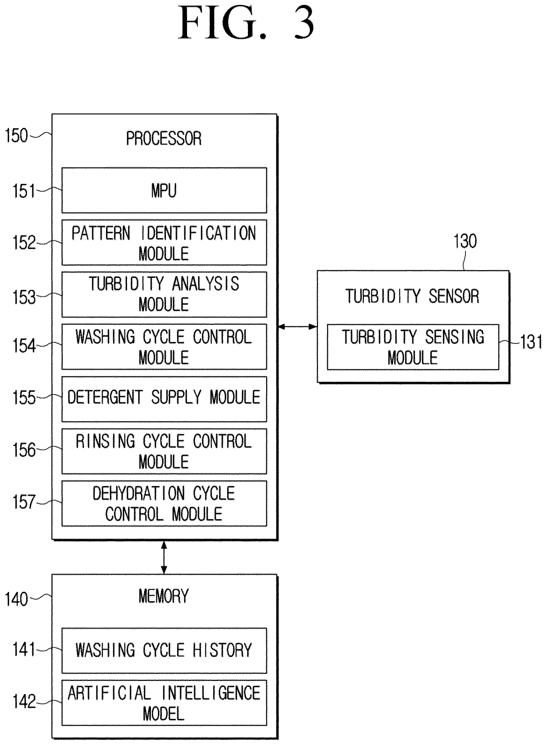

FIG. 3 is a view for explaining a process in which a module included in the processor uses the turbidity sensor 130 and the memory 140.

Referring to FIG. 3, the washing machine 100 may include the turbidity sensor 130, the memory 140, and the processor 150.

Here, the turbidity sensor 130 may include a turbidity sensing module 131. Here, the turbidity sensing module may indicate a module measuring the water turbidity after the washing cycle is performed.

Here, the processor 150 may include at least one of a micro processor unit (MPU) 151, a pattern identification module 152, a turbidity analysis module 153, a washing cycle control module 154, a detergent supply module 155, a rinsing cycle control module 156, or a dehydration cycle control module 157.

Here, the MPU 151 may perform a calculation (or computation) operation.

The pattern identification module 152 may be a module identifying the user usage pattern for the washing machine. In detail, the pattern identification module 152 may identify whether the washing cycle having the turbidity less than the critical value is performed at a certain ratio or more among the total washing cycles of the washing machine 100.

The turbidity analysis module 153 may be a module sensing the water turbidity.

The washing cycle control module 154 may be a module controlling an operation related to the washing cycle. The detergent supply module 155 may perform the washing cycle based on the determined amount of detergent and washing time period.

The detergent supply module 155 may supply the detergent into the drum 110 before the washing cycle is performed or while the washing cycle is being performed.

The rinsing cycle control module 156 may be a module controlling an operation related to the rinsing cycle. The rinsing cycle control module 156 may perform the rinsing cycle based on the determined amount of water, rinsing time period, and rinsing number.

The dehydration cycle control module 157 may be a module controlling an operation related to a dehydration cycle. The dehydration cycle control module 157 may perform the dehydration cycle based on the determined rotation speed and dehydration time period.

Here, the memory 140 may include at least one of a washing cycle history 141 or an artificial intelligence model 142. Here, the washing cycle history 141 may indicate information related to the washing cycle performed by the washing machine 100. Here, the artificial intelligence model 142 may indicate the artificial intelligence model 800 in FIG. 8 or the artificial intelligence model 900 in FIG. 9.

Meanwhile, in case of receiving the input from the user using the washing cycle, the processor 150 may determine whether the washing cycle of the washing machine 100 is performed in the predetermined pattern. For this purpose, the processor 150 may transmit a control signal for requesting the washing cycle history 141 to the memory 140. The memory 140 may transmit the washing cycle history 141 to the processor 150 based on the control signal received from the processor 150.

In addition, the pattern identification module 152 may identify the usage pattern of the washing machine 100 based on the washing cycle history 141 received from the memory 140. In detail, the pattern identification module 152 may identify the usage pattern based on the first number ratio among the washing cycle history. In this process, the pattern identification module 152 may use the calculation operation of the MPU 151. The MPU 151 included in the processor 150 may calculate a ratio of the washing cycle having the turbidity less than the critical value among the plurality of washing cycles stored in the washing cycle history 141. In addition, the MPU 151 may calculate whether the ratio of the washing cycle having the turbidity less than the critical value is the critical ratio or more. The pattern identification module 152 may identify that the user of the washing machine 100 frequently uses the low-contamination washing cycle in case of identifying that the ratio of the washing cycle having the turbidity less than the critical value that is identified by the MPU 151 is the critical ratio or more.

In addition, each of the washing cycle control module 154, the detergent supply module 155, the rinsing cycle control module 156, and the dehydration cycle control module 157 may perform a control operation appropriate for the user usage pattern identified by the pattern identification module 152.

Here, the turbidity analysis module 153 may analyze the water turbidity and perform a cycle corresponding to the turbidity. The processor 150 may transmit the control signal for requesting the sensing data from the turbidity sensor 130 in case of identifying an event for analyzing the water turbidity. The turbidity sensor 130 may sense the water turbidity in case of receiving the control signal from the processor 150. In addition, the turbidity sensor 130 may transmit the sensed sensing data to the processor 150.

Here, the turbidity analysis module 153 may determine cycle information corresponding to the turbidity currently sensed based on the sensing data received from the turbidity sensor 130. In addition, the turbidity analysis module 153 may transmit the determined cycle information to each of the washing cycle control module 154, the detergent supply module 155, the rinsing cycle control module 156, and the dehydration cycle control module 157.

Each of the washing cycle control module 154, the detergent supply module 155, the rinsing cycle control module 156, and the dehydration cycle control module 157 may perform its operation based on the cycle information received from the turbidity analysis module 153.

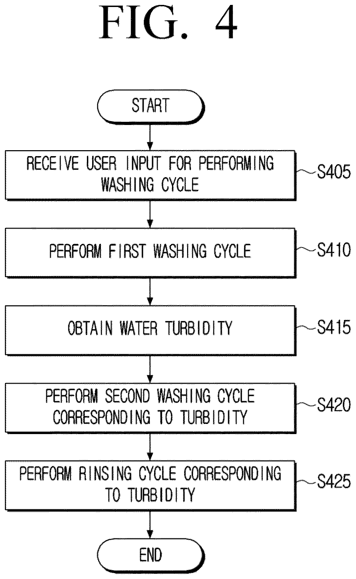

FIG. 4 is a flow chart for explaining operations of performing the washing cycle and the rinsing cycle based on the water turbidity.

Referring to FIG. 4, the washing machine 100 may receive the user input for performing the washing cycle (S405). Here, the user input may be obtained through a manipulation interface (not shown) included in the washing machine 100. Here, the manipulation interface may indicate a touch screen or a physical button.

In addition, the washing machine 100 may perform the first washing cycle in case of receiving the user input (S410). Here, the first washing cycle may indicate a cycle where the first amount of detergent is supplied and the washing is performed for the first time period.

In addition, the washing machine 100 may obtain the water turbidity in case of identifying the predetermined event (S415). Here, the water may indicate water in the drum of the washing machine. Here, the predetermined event may be at least one of an event where the first washing cycle ends, an event where the predetermined time period elapses after the first washing cycle starts, or an event where the predetermined ratio elapses during a total operation time period of the first washing cycle.

In addition, the washing machine 100 may perform the second washing cycle corresponding to the water turbidity (S420). Here, the washing machine 100 may determine the appropriate amount of detergent and washing time period for the water turbidity. In addition, the washing machine 100 may perform the second washing cycle based on the determined amount of detergent and washing time period. Therefore, the first washing cycle and the second washing cycle may have set matters (e.g., the amount of detergent and the washing time period) different from each other.

In addition, the washing machine 100 may perform the rinsing cycle corresponding to the water turbidity (S425). Here, the washing machine 100 may determine the appropriate water supply amount and rinsing number for the water turbidity. In addition, the washing machine 100 may perform the rinsing cycle based on the determined water supply amount and rinsing number.

FIG. 5 is a flow chart for explaining an operation of updating the washing cycle history.

Referring to FIG. 5, the washing machine 100 may obtain the water turbidity after the washing cycle (S505). In addition, the washing machine 100 may identify whether the water turbidity is less than the critical value (S510). The washing machine 100 may determine that the performed washing cycle is the low contamination cycle (S515) in case that the water turbidity is less than the critical value (S510-Y). In addition, the washing machine 100 may count the washing cycle as the first number.

Meanwhile, the washing machine 100 may determine that the performed washing cycle is a high contamination cycle (or a one-way contamination cycle) (S520) in case that the water turbidity is the critical value or more (S510-N). In addition, the washing machine 100 may count the washing cycle as the second number.

Here, the low contamination cycle may indicate a cycle where the laundry contamination level is low thus requiring no additional washing cycle. Here, the high contamination cycle may indicate a cycle where the laundry contamination level is high, thus requiring the additional washing cycle.

In addition, the washing machine 100 may update the washing cycle history (S525) after performing the step S510 or the step S515. In detail, the washing machine 100 may update the first number or the second number.

FIG. 6 is a flow chart for explaining an operation of classifying the normal mode and the low-contamination determination mode from each other.

Referring to FIG. 6, the washing machine 100 may store the washing cycle history in the memory 140 (S605). In addition, the washing machine 100 may obtain a user command for performing the washing cycle (S610). In addition, the washing machine 100 may obtain the first number ratio (S615). Here, the first number ratio may indicate the ratio in which the washing cycle having the sensed turbidity less than the critical value is performed among the total washing cycles performed by the washing machine 100. In detail, the washing machine 100 may calculate the first number ratio by dividing the number of washing cycles having the turbidity less than the critical value that are performed by the number of total washing cycles.

In addition, the washing machine 100 may identify whether the first number ratio is the critical ratio or more (S620). The washing machine 100 may be operated in the low-contamination determination mode (S625) in case that the first number ratio is less than the critical ratio (S620-N). Here, the low-contamination determination mode may indicate the mode where the laundry contamination level is determined and the detailed setting of the washing cycle is adjusted. Here, the detailed setting may indicate any one of the amount of detergent, the water supply amount, or the washing time period. The description describes details of the low-contamination determination mode in steps S1020 to S1045 of FIG. 10.

Meanwhile, the washing machine 100 may be operated in the normal mode (S630) in case that the first number ratio is the critical ratio or more (S620-Y). Here, the normal mode may indicate the mode where one washing cycle is performed without performing the additional washing cycle. The description describes details of the normal mode in steps S1010 and S1015 of FIG. 10.

Meanwhile, the low-contamination determination mode may be described as the economy mode or a power saving mode. In addition, the normal mode may be described as the first mode, and the low-contamination determination mode may be described as the second mode.

Meanwhile, in some other implementation examples, the step S615 may be replaced by the operation of "obtaining the first number", and the step S620 may be replaced by the operation of "identifying whether the first number is the critical number or more" in an embodiment where the first number and the critical number are compared with each other.

FIG. 7 is a flow chart for explaining an operation of determining a contamination grade of the washing cycle.

Referring to FIG. 7, the washing machine 100 may obtain the water turbidity after the washing cycle (S705). In addition, the washing machine 100 may identify whether the water turbidity is less than the first critical value (S710). The washing machine 100 may determine the washing cycle as the low contamination cycle (S715) in case that the water turbidity is less than the first critical value (S710-Y). In addition, the washing machine 100 may count the washing cycle as the first number and update the first number.

Meanwhile, the washing machine 100 may identify whether the water turbidity is less than the second critical value (S720) in case that the water turbidity is the first critical value or more (S710-N). The washing machine 100 may determine the washing cycle as the general contamination cycle (S725) in case that the water turbidity is less than the second critical value (S720-Y). In addition, the washing machine 100 may count the washing cycle as the second number and update the second number.

Meanwhile, the washing machine 100 may determine the washing cycle as the high contamination cycle (S730) in case that the water turbidity is the second critical value or more (S720-N). In addition, the washing machine 100 may count the washing cycle as the second number and update the second number.

Here, the low contamination cycle may be described as a first type cycle, the general contamination cycle as a second type cycle, and the high contamination cycle as a third type cycle.

In addition, the washing machine 100 may update the washing cycle history after any one of the steps S715, S725, and S730 is performed (S735).

FIG. 8 is a view for explaining an operation of determining the amount of detergent and the washing time period by using an artificial intelligence model 1000.

Referring to FIG. 8, the washing machine 100 may store the artificial intelligence model 1000. Here, the washing machine 100 may learn the artificial intelligence model 1000 and generate the artificial intelligence model 800 for determining an optimal amount of detergent and an optimal washing time period.

The artificial intelligence model 1000 may perform a learning operation based on input data and output data. Here, the input data may be at least one of the laundry weight, the laundry volume, the temperature, the humidity, the amount of detergent, or the washing time period. Here, the temperature and the humidity may respectively be obtained by a temperature sensor and a humidity sensor, included in the washing machine 100. In addition, the amount of detergent may indicate an amount of detergent that is used to perform the washing cycle. In addition, the washing time period may indicate a time period required to perform the washing cycle.

Here, the output data may be the water turbidity sensed using the turbidity sensor 130. Here, the washing machine 100 may obtain the water turbidity after the washing cycle is completed. In addition, the water turbidity may be used as the output data in the learning operation of the artificial intelligence model 1000.

Here, learning data may include the input data and the output data. Here, the artificial intelligence model 1000 may generate the new artificial intelligence model 800 by learning a relationship between the input data and the output data. As a result, the artificial intelligence model 1000 may learn a relationship between at least one of the laundry weight, the laundry volume, the temperature, the humidity, the amount of detergent, or the washing time period and the water turbidity to generate the artificial intelligence model 800 for determining the optimal amount of detergent and the optimal washing time period.

The washing machine 100 may obtain the optimal amount of detergent and the optimal washing time period based on the generated artificial intelligence model 800. In detail, the washing machine 100 may input at least one of the laundry weight, the laundry volume, the temperature, the humidity, the amount of detergent, or the washing time period into the artificial intelligence model 800 to obtain the optimal amount of detergent and the optimal washing time period for the laundry currently existing in the washing machine 100. In addition, the washing machine 100 may perform the washing cycle based on the obtained optimal amount of detergent and the obtained optimal washing time period.

Meanwhile, functions related to an artificial intelligence according to the present disclosure may be operated by the processor and the memory. The processor may be one or more processors. Here, each of the one or more processors may be a general-purpose processor such as a central processing unit (CPU), an application processor (AP) or a digital signal processor (DSP), a graphics-only processor such as a graphic processing unit (GPU) or a vision processing unit (VPU), or an artificial intelligence-only processor such as a neural processing unit (NPU). Each of one or more processors may control the input data to be processed based on a predefined operation rule or the artificial intelligence model, stored in the memory. Alternatively, each of one or more processors may be the AI-only processor, and in this case, the AI-only processor may be designed to have a hardware structure specialized for processing a specific AI model.

The predefined operation rule or the artificial intelligence model may be obtained by learning. Here, to be obtained by the learning may indicate that a basic artificial intelligence model performs the learning by using a number of learning data, based on a learning algorithm, thereby obtaining the predefined operation rule or the artificial intelligence model, set to perform the desired feature (or purpose). Such learning may be performed by a device itself in which the artificial intelligence is performed according to the present disclosure, or perform by a separate server/system. An example of the learning algorithm may include, supervised learning, unsupervised learning, semi-supervised learning, or reinforcement learning, and is not limited thereto.

The artificial intelligence model may include a plurality of neural network layers. Each of the plurality of neural network layers may have a plurality of weight values, and perform a neural network computation by computation of a previous-layer computation result and the plurality of weight values. The plurality of weight values of the plurality of neural network layers may be optimized by a learning result of the artificial intelligence model. For example, the plurality of weight values may be updated during a learning process to reduce or minimize a loss value or a cost value, acquired from the artificial intelligence model. The artificial neural network may include a deep neural network (DNN), and include, for example, a convolutional neural network (CNN), a recurrent neural network (RNN), a restricted Boltzmann machine (RBM), a deep belief network (DBN), a bidirectional recurrent deep neural network (BRDNN), a deep q-network, or the like, and is not limited thereto.

FIG. 9 is a view for explaining an operation of obtaining a model for determining the low contamination cycle by using the artificial intelligence model 1000.

Referring to FIG. 9, the washing machine 100 may store the artificial intelligence model 1000. Here, the washing machine 100 may learn the artificial intelligence model 1000 and generate the artificial intelligence model 900. Here, the artificial intelligence model 900 may be a model generating the probability value of using the low-contamination washing cycle.

The artificial intelligence model 1000 may perform the learning operation based on the input data and the output data. Here, the input data may be the washing cycle history of the plurality of users. The washing cycle history may indicate the information related to the cycle used by the user through the washing machine 100. Here, the output data may be each low-contamination washing cycle ratio of the plurality of users.

For example, the input data may be the first user's washing cycle history, the second user's washing cycle history, and a third user's washing cycle history. Here, the output data may be a ratio of the low-contamination washing cycle among the total washing cycles used by the first user, a ratio of the low-contamination washing cycle among the total washing cycles used by the second user, and a ratio of the low-contamination washing cycle among the total washing cycles used by the third user.

Here, the learning data may include the input data and the output data. Here, the artificial intelligence model 1000 may generate the artificial intelligence model 900 based on the learning data corresponding to the plurality of users. Here, the artificial intelligence model 900 may be a model receiving the washing cycle history as the input data and obtaining the probability value of using the low-contamination washing cycle as the output data.

Therefore, the washing machine 100 may store the trained artificial intelligence model 900 in the memory 140, and obtain the probability value in which the user uses the low-contamination washing cycle by inputting the user's washing cycle history into the artificial intelligence model 900. In addition, the washing machine 100 may determine whether to be operated in the low-contamination determination mode in the step S625 or the normal mode in the step S630 based on the obtained probability value. In detail, the washing machine 100 may be operated in the low-contamination determination mode in case that the probability value is the critical probability value or more. Here, the low-contamination determination mode may indicate performing the steps S1020 to S1045 of FIG. 10. The steps in FIG. 10 are described as examples, are not necessarily limited thereto, and may be applied to another embodiment.

FIG. 10 is a flow chart for explaining an operation of determining whether to perform the second washing cycle based on the water turbidity.

Referring to FIG. 10, the washing machine 100 may identify whether the first number ratio is the critical ratio or more (S1005). Here, the washing machine 100 may be operated in the normal mode in case that the first number ratio is less than the critical ratio (S1005-N). In detail, the washing machine 100 may supply the third amount of detergent (S1010). In addition, the washing machine 100 may perform the third washing cycle for a third time period (S1015). Here, the third washing cycle may indicate the cycle where the washing is performed for the third time period by using the third amount of detergent.

Meanwhile, the washing machine 100 may be operated in the low-contamination determination mode in case that the first number ratio is the critical ratio or more (S1005-Y). In detail, the washing machine 100 may supply the first amount of detergent (S1020). In addition, the washing machine 100 may perform the first washing cycle for the first time period (S1025). Here, the first washing cycle may indicate the cycle where the washing is performed for the first time period by using the first amount of detergent.

Meanwhile, the washing machine 100 may obtain the water turbidity based on the predetermined event (S1030) after performing the first washing cycle. Here, the predetermined event may be at least one of the event where the first washing cycle ends, the event where the predetermined time period elapses after the first washing cycle starts, or the event where the predetermined ratio elapses during the total operation time period of the first washing cycle.

In addition, the washing machine 100 may identify whether the water turbidity is less than the critical value (S1035). The washing machine 100 may end the washing cycle in case that the water turbidity is less than the critical value (S1035-Y). Meanwhile, the washing machine 100 may supply the second amount of detergent (S1040) in case that the water turbidity is the critical value or more (S1035-N). In addition, the washing machine 100 may perform the second washing cycle for the second time period (S1045). Here, the second washing cycle may indicate the cycle where the washing is performed for the second time period by using the second amount of detergent.

Meanwhile, although not described with reference to FIG. 10, the first number and the second number may be updated based on the water turbidity after the washing cycle is performed.

The processor 150 may end the first washing cycle and count the first washing cycle as the first number in case that the turbidity is less than the critical value in the step S1035. In addition, the washing machine 100 may update the first number.

The processor 150 may perform the second washing cycle and count the second washing cycle as the second number in case that the turbidity is the critical value or more in the step S1035. In addition, the washing machine 100 may update the second number.

The processor 150 may detect the water turbidity by using the turbidity sensor 130 in case that the third washing cycle is performed in the step S1015. The processor 150 may end the third washing cycle and count the third washing cycle as the first number in case that the turbidity is less than the critical value. In addition, the washing machine 100 may update the first number. The processor 150 may count the third washing cycle as the second number in case that the turbidity is the critical value or more. In addition, the washing machine 100 may update the second number.

The first number and the second number may not be updated after the second washing cycle is performed in the step S1045. The reason is that the first number and the second number are already updated once in the step S1035.

Meanwhile, in some other implementation examples, the step S1005 may be replaced by the operation of "identifying whether the first number is the critical number or more" in an embodiment where the first number and critical number are compared with each other.

FIG. 11 is a view for explaining a guide user interface (UI) related to the second washing cycle.

Referring to FIG. 11, the washing machine 100 may output a guide UI 1100 related to the second washing cycle. In detail, the washing machine 100 may generate the guide UI 1100 including information related to the second washing cycle in case that the second washing cycle is performed.

Here, the guide UI 1100 may include at least one of an UI 1101 including information indicating that laundry contamination is detected, an UI 1102 including information indicating that additional washing cycle is performed, an UI 1103 indicating an amount of detergent to be added, an UI 1104 indicating a remaining time period of the added washing cycle, or an UI 1105 indicating a remaining time period of the total cycle performed by the washing machine 100.

In detail, the washing machine 100 may obtain at least one of the amount of detergent (i.e., the second amount) used in the second washing cycle, the washing time period (the second time period), or the remaining time period of the total cycle. In addition, the washing machine 100 may generate the guide UI 1100 based on at least one of the amount of detergent (or the second amount), the washing time period (or the second time period), and the remaining time period of the total cycle.

In addition, the washing machine 100 may provide the guide UI 1100 to the user. As an example, the washing machine 100 may display the guide UI 1100 on a display 190. As another example, the washing machine 100 may output the guide UI 1100 through the speaker (not shown).

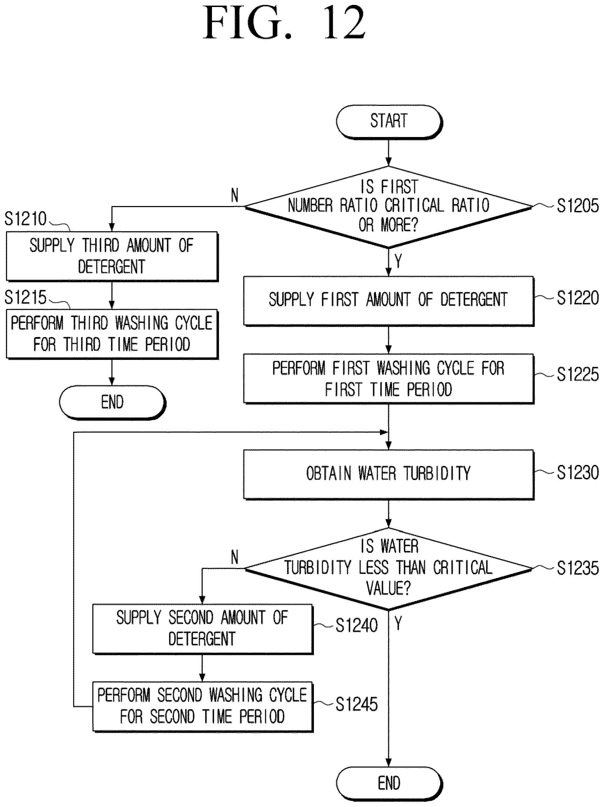

FIG. 12 is a flow chart for explaining an operation of repeatedly checking the water turbidity.

Referring to FIG. 12, steps S1205, S1210, S1215, S1220, S1225, S1230, S1235, S1240, and S1245 may correspond to the steps S1005, S1010, S1015, S1020, S1025, S1030, S1035, S 1040, and S1045 of FIG.10, and redundant descriptions thereof are thus omitted.

Meanwhile, unlike in FIG. 10, the washing machine 100 may obtain the water turbidity once again after performing the second washing cycle (S1230). This operation is performed to recheck the laundry contamination level after the second washing cycle is completed. The washing machine 100 may end the washing cycle if the water turbidity obtained after the second washing cycle is less than the critical value (S1235-Y).

However, the washing machine 100 may perform the second washing cycle once again in case that the water turbidity obtained after the second washing cycle is the critical value or more (S1235-N).

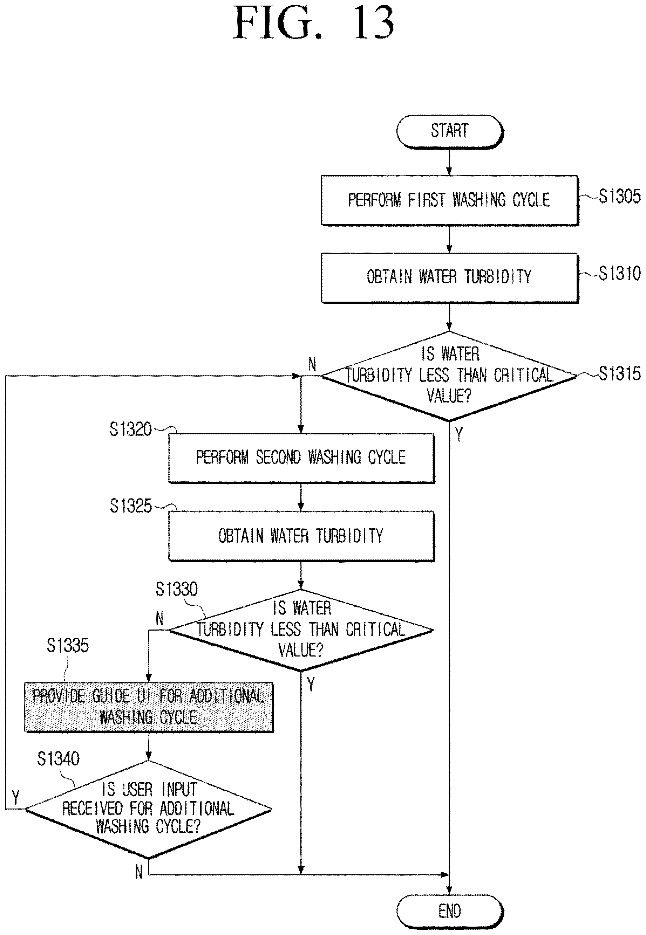

FIG. 13 is a view for explaining an operation of providing the guide UI for the additional washing cycle.

Referring to FIG. 13, the washing machine 100 may perform the first washing cycle (S1305). In addition, the washing machine 100 may obtain the water turbidity (S1310). In addition, the washing machine 100 may identify whether the water turbidity is less than the critical value (S1315).

The washing machine 100 may end the washing cycle in case that the water turbidity is less than the critical value (S1315-Y). Meanwhile, the washing machine 100 may perform the second washing cycle (S1320) in case that the water turbidity is the critical value or more (S1315-N). In addition, the washing machine 100 may obtain the water turbidity again (S1325). In addition, the washing machine 100 may re-identify whether the water turbidity is less than the critical value (S1330).

The washing machine 100 may end the washing cycle in case that the water turbidity is less than the critical value (S1330-Y). Meanwhile, the washing machine 100 may provide the guide UI for the additional washing cycle (S1335) in case that the water turbidity is the critical value or more (S 1330-N). Here, the description describes the guide UI with reference to FIG. 14.

In addition, the washing machine 100 may identify whether the user input is received through the guide UI provided in the step S1335 (S1340). In detail, the washing machine 100 may determine whether the user input for the additional washing cycle is received. The washing machine 100 may end the washing cycle in case that the user input for the additional washing cycle is not received (S1340-N). Meanwhile, the washing machine 100 may perform the second washing cycle once again in case that the user input for the additional washing cycle is received (S1340-Y). Here, the washing machine 100 may perform the steps S1320 to S1340 again.

Meanwhile, the description describes that the guide UI is provided based on the turbidity obtained after the second washing cycle is performed with reference to FIG. 13. In some implementation examples, the guide UI may be provided based on the turbidity obtained after the first washing cycle is performed. For example, the washing machine 100 may output the guide UI before performing the step S1320 and receive the user input for performing the second washing cycle based on the output guide UI.

FIG. 14 is a view for explaining the guide UI for the additional washing cycle.

Referring to FIG. 14, the washing machine 100 may sense the water turbidity in case that the washing cycle is completed. In addition, the washing machine 100 may query the user whether to proceed with the additional washing based on the sensed water turbidity. In detail, the washing machine 100 may generate a guide UI 1400 for receiving the user command related to the additional washing.

Here, the guide UI 1400 may include at least one of a UI 1401 including content that the laundry contamination is detected or a UI 1402 for querying whether to proceed with the additional washing.

In addition, the washing machine 100 may provide the guide UI 1400 to the user. As an example, the washing machine 100 may display the guide UI 1400 on the display 190. As another example, the washing machine 100 may output the guide UI 1400 through the speaker (not shown).

FIG. 15 is a flow chart for explaining an operation of performing a fourth washing cycle based on the water turbidity.

Referring to FIG. 15, steps S1505, S1510, S1515, S1520, S1525, and S1530 may correspond to the steps S1005, S1010, S1015, S1020, S1025, and S1030 of FIG. 10, and redundant descriptions thereof are thus omitted.

Meanwhile, unlike in FIG. 10, the washing machine 100 may control the washing cycle by using two critical values (or the first critical value and the second critical value). In detail, the washing machine 100 may identify whether the turbidity is less than the first critical value (S1535) after obtaining the water turbidity in the step S1530. The washing machine 100 may end the washing cycle in case that the turbidity is less than the first critical value (S1535-Y).

Meanwhile, the washing machine 100 may identify whether the turbidity is less than the second critical value (S1540) in case that the turbidity is the first critical value or more (S1535-N). The washing machine 100 may supply the second amount of detergent (S1545) in case that the turbidity is less than the second critical value (S1540-Y). In addition, the washing machine 100 may perform the second washing cycle for the second time period (S1550).

Meanwhile, the washing machine 100 may supply the fourth amount of detergent (S1555) in case that the turbidity is the second critical value or more (S1540-N). In addition, the washing machine 100 may perform the fourth washing cycle for the fourth time period (S1560). Here, the fourth washing cycle may indicate the cycle where the washing is performed for the fourth time period by using the fourth amount of detergent. Here, the fourth amount may be more than the second amount. In addition, the fourth time period may be greater than the second time period.

FIG. 16 is a flow chart for explaining an operation of performing the fifth washing cycle based on the water turbidity.

Referring to FIG. 16, steps S1605, S1610, S1615, S1620, S1625, S1630, S1635, S1640, S1645, and S1650 may correspond to the steps S1505, S1510, S1515, S1520, S1525, S1530, S1535, S1540, S1545, and S15 in FIG. 15, and redundant descriptions thereof are thus omitted

However, a detergent type may here be classified into the first detergent and the second detergent. In detail, the detergent supplied in the steps S1610, S1620, S1645, and S1655 may be the first detergent, and the detergent supplied in the step S1660 may be the second detergent.

Here, the second detergent may be a detergent different from the first detergent. Here, the second detergent may indicate a detergent having a better resolution ability than the first detergent. In detail, the second detergent may indicate a detergent that may lower the laundry contamination level more than the first detergent (assuming the same amount).

In detail, the washing machine 100 may supply the second amount of the first detergent (S1655) in case that the turbidity is the second critical value or more (S1640-N). In addition, the washing machine 100 may supply the fifth amount of the second detergent (S1660). In addition, the washing machine 100 may perform the fifth washing cycle for the fifth time period. Here, the fifth washing cycle may indicate the cycle where the washing is performed for the fifth time period by supplying the second amount of the first detergent and supplying the fifth amount of the second detergent.

Meanwhile, the description describes that the step S1660 is further performed in addition to the step S1655 with reference to FIG. 16. In some implementation examples, the step S1655 may be omitted.

FIG. 17 is a flow chart for explaining an operation of determining whether to perform the second rinsing cycle based on the water turbidity.

Referring to FIG. 17, the washing machine 100 may identify whether the first number ratio is the critical ratio or more (S1705). The washing machine 100 may perform the second rinsing cycle (S1710) in case that the first number ratio is less than the critical ratio (S1705-N).

Meanwhile, the washing machine 100 may obtain the water turbidity (S1715) in case that the first number ratio is the critical ratio or more (S1705-Y). In addition, the washing machine 100 may identify whether the water turbidity is less than the critical value (S1720). Here, the washing machine 100 may perform the first rinsing cycle (S1725) in case that the turbidity is less than the critical value (S1720-Y). Meanwhile, the washing machine 100 may perform the second rinsing cycle (S1730) in case that the turbidity is the critical value or more (S1720-N).

Here, the first rinsing cycle may indicate the cycle where the rinsing is performed with the first number. In addition, the second rinsing cycle may indicate the cycle where the rinsing is performed with the second number. Here, the rinsing cycle may indicate operations of supplying the predetermined amount of water into the drum, rotating the drum after supplying the water, and discharging the water after rotating the drum. Here, the first rinsing cycle may have a number different from that of the second rinsing cycle. For example, the first rinsing cycle may be a cycle where the rinsing is performed once, and the second rinsing cycle may be a cycle where the rinsing is performed twice.

Meanwhile, in some other implementation examples, the step S1705 may be replaced by the operation of "identifying whether the first number is the critical number or more" in an embodiment where the first number and critical number are compared with each other.

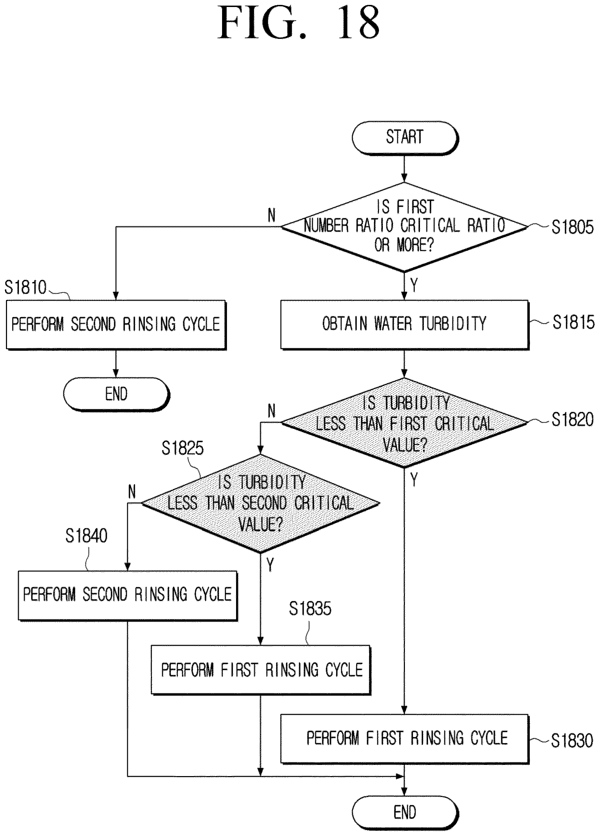

FIG. 18 is a flowchart for explaining an operation of determining the first rinsing cycle and the second rinsing cycle based on the water turbidity.

Referring to FIG. 18, steps S1805, S1810, and S1815 may correspond to the steps S1705, S1710, and S1715 of FIG. 17, and redundant descriptions thereof are thus omitted

Here, the washing machine 100 may identify whether the turbidity is less than the first critical value (S1820) after obtaining the water turbidity in the step S1815. Here, the washing machine 100 may perform the first rinsing cycle (S1830) in case that the turbidity is less than the first critical value (S1820-Y). Here, the washing machine 100 may identify whether the turbidity is less than the second critical value (S1825) in case that the turbidity is the first critical value or more (S1820-N).

Here, the washing machine 100 may perform the first rinsing cycle (S1835) in case that the turbidity is less than the second critical value (S1825-Y). Meanwhile, the washing machine 100 may perform the second rinsing cycle (S1840) in case that the turbidity is the second critical value or more (S1825-N).

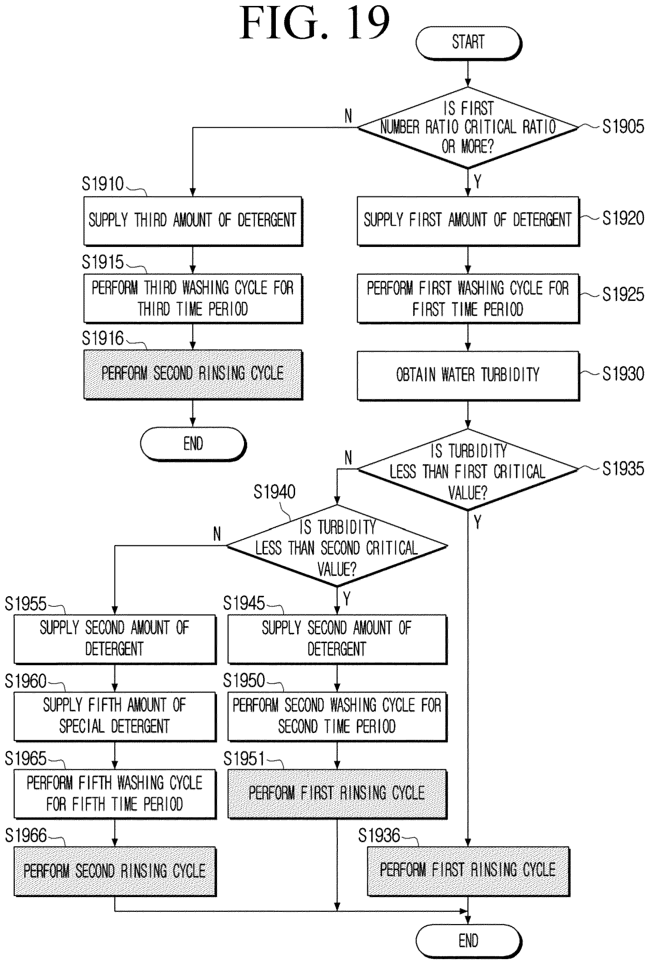

FIG. 19 is a flow chart for explaining an operation of performing the washing cycle and the rinsing cycle based on the water turbidity.

Referring to FIG. 19, steps S1905, S1910, S1915, S1920, S1925, S1930, S1935, S1940, S1945, S1950, S1955, S1960, and S1965 may correspond to the steps S1605, S1610, S1615, S1620, S1625, S1630, S1635, S1640, S1645, S1650, S1655, S1660, and S1665 of FIG. 16, and redundant descriptions thereof are thus omitted.

Here, the washing machine 100 may further perform the rinsing cycle in addition to an embodiment of FIG. 16. In detail, the washing machine 100 may perform the second rinsing cycle after performing the third washing cycle in the step S1915 (S1916).

In addition, the washing machine 100 may end the washing cycle and perform the first rinsing cycle (S1936) in case of identifying that the turbidity is less than the first critical value (S1935-Y).

In addition, the washing machine 100 may perform the first rinsing cycle (S1951) after performing the second washing cycle in the step S1950.

In addition, the washing machine 100 may perform the second rinsing cycle (S1966) after performing the fifth washing cycle in the step S1965.

Here, the number of the first rinsing cycle and the number of the second rinsing cycle may be different from each other. Here, the number of the second rinsing cycle may be larger than that of the first rinsing cycle. In detail, the washing machine 100 may perform the second rinsing cycle in case of identifying that the first number ratio is less than the critical ratio or the water turbidity is the second critical value or more.

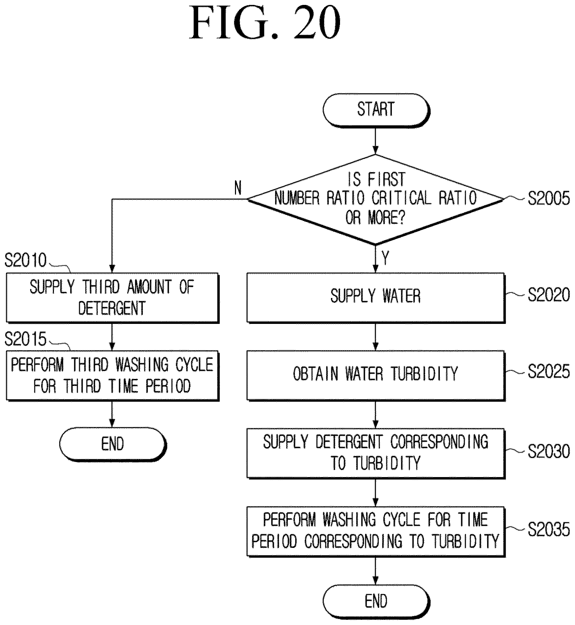

FIG. 20 is a flow chart for explaining an operation of determining the detergent and the time period, corresponding to the water turbidity.

Referring to FIG. 20, steps S2005, S2010, and S2015 may correspond to the steps S1005, S1010, and S1015 of FIG. 10, and redundant descriptions thereof are thus omitted. Unlike in FIG. 10, the washing machine 100 may obtain the water turbidity before performing the washing cycle.

Here, the washing machine 100 may supply the water into the drum 110 (S2020) in case that the first number ratio is the critical ratio or more (S2005). Here, the washing machine 100 may rotate the drum 110. In addition, the washing machine 100 may obtain the water turbidity by using the turbidity sensor 130 (S2025).

In addition, the washing machine 100 may supply the detergent based on the amount of detergent corresponding to the turbidity (S2030). In detail, the memory 140 may store a detergent amount lookup table in which each of the plurality of turbidities and the amount of detergent corresponding thereto are mapped to each other. In case of obtaining the turbidity, the washing machine 100 may identify the amount of detergent corresponding to the obtained turbidity based on the detergent amount lookup table stored in the memory 140. In addition, the washing machine 100 may supply the identified amount of detergent.

In addition, the washing machine 100 may perform the washing cycle for a time period corresponding to the turbidity (S2035). In detail, the memory 140 may store a washing time period lookup table in which each of the plurality of turbidities and the washing time period corresponding thereto are mapped to each other. In case of obtaining the turbidity, the washing machine 100 may identify the washing time period corresponding to the obtained turbidity based on the washing time period lookup table stored in the memory 140. In addition, the washing machine 100 may perform the washing cycle for the identified washing time period based on the amount of detergent that is identified in the step S2030.

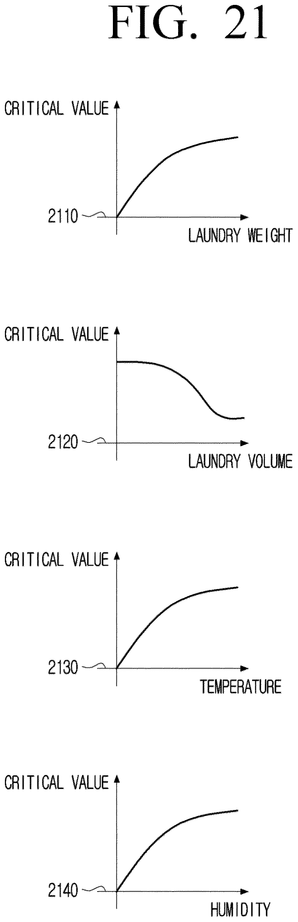

FIG. 21 is a view for explaining an operation of changing the critical value based on the sensing data.

Referring to FIG. 21, the washing machine 100 may change the critical value used in water turbidity analysis based on the various sensing data.

Here, the critical value used in the turbidity analysis may indicate the critical value used in the step S505 of FIG. 5, the step S1035 of FIG. 10, the step S1235 of FIG. 12, the step S1330 of FIG. 13, and the step S1720 of FIG. 17.

Meanwhile, the critical value used in the turbidity analysis may indicate at least one of the first critical value or the second critical value, used in the steps S710 and S720 of FIG. 7, the steps S1535 and S1540 of FIG. 15, the steps S1635 and S1640 of FIG. 16, the steps S1820 and S1825 of FIG. 18, and the steps S1935 and S1940 of FIG. 19.

A graph 2110 may show a relationship between the laundry weight and the critical value. The more laundry, the higher water turbidity. For example, the laundry may have the same average contamination level, and have different water turbidity based on a laundry amount. The more laundry, the higher water turbidity. Accordingly, the washing machine 100 may identify the laundry weight and set the critical value corresponding to the identified laundry weight. In detail, the washing machine 100 may set the critical value, used in the turbidity analysis, to be larger as the laundry weight is greater.

A graph 2120 may show a relationship between the laundry volume and the critical value. Assume laundry of the same weight. Here, the greater laundry volume, the lower water turbidity. For example, the laundry may have the same average contamination level, and have the different water turbidity based on the laundry volume. The greater laundry volume, the lower water turbidity. Therefore, the washing machine 100 may identify the laundry volume and set the critical value corresponding to the identified volume. In detail, the washing machine 100 may set the critical value, used in the turbidity analysis, to be smaller as the laundry volume is greater. It is highly possible that the laundry of the same weight is bedding in case of having a greater volume. The bedding may have a lower contamination level than another laundry.

A graph 2130 may show a relationship between the temperature and the critical value. The higher temperature, the greater water turbidity. For example, the laundry may have the same average contamination level, and have the different water turbidity based on the temperature. The higher temperature, the greater water turbidity. Therefore, the washing machine 100 may sense an internal temperature of the drum 110 through the temperature sensor, or the like, and set the critical value corresponding to the sensed temperature. In detail, the washing machine 100 may set the critical value, used in the turbidity analysis, to be larger as the temperature is higher.

A graph 2140 may show a relationship between the humidity and the critical value. The higher humidity, the greater water turbidity. For example, the laundry may have the same average contamination level, and have the different water turbidity based on the humidity. The higher humidity, the greater water turbidity. Therefore, the washing machine 100 may sense an internal humidity of the drum 110 through the humidity sensor, or the like, and set the critical value corresponding to the sensed humidity. In detail, the washing machine 100 may set the critical value, used in the turbidity analysis, to be larger as the humidity is higher.

FIG. 22 is a view for explaining an operation of changing the critical value based on an operation mode of the washing machine 100 or a laundry type.

Referring to a graph 2210 of FIG. 22, the critical value may be set to be different based on the operation mode. The different water turbidity may be sensed based on the operation mode even in the laundry having the same contamination level. The reason is that a specific mode (the first mode) may have a greater amount of water. In detail, the water turbidity may be sensed as relatively low in the first mode. Therefore, the washing machine 100 may set the critical value of the first mode to be lower than the critical value of the second mode. In addition, the water turbidity may be sensed as relatively high in the second mode. Therefore, the washing machine 100 may set the critical value of the second mode to be higher than the critical value of the first mode. Here, the critical value of the first mode may be described as the first critical value, and the critical value of the second mode may be described as the second critical value.

Referring to a graph 2220 of FIG. 22, the critical value may be set to be different based on the laundry type. The different water turbidity may be sensed based on the laundry type even in the laundry having the same contamination level. In detail, the water turbidity may be sensed as relatively low in a first laundry type. Accordingly, the washing machine 100 may set the critical value corresponding to the first laundry type to be lower than the critical value corresponding to a second laundry type. In addition, the water turbidity may be sensed as relatively high in the second laundry type. Accordingly, the washing machine 100 may set the critical value corresponding to the second laundry type to be higher than the critical value corresponding to the first laundry type. Here, the critical value corresponding to the first laundry type may be described as the first critical value, and the critical value corresponding to the second laundry type may be described as the second critical value.

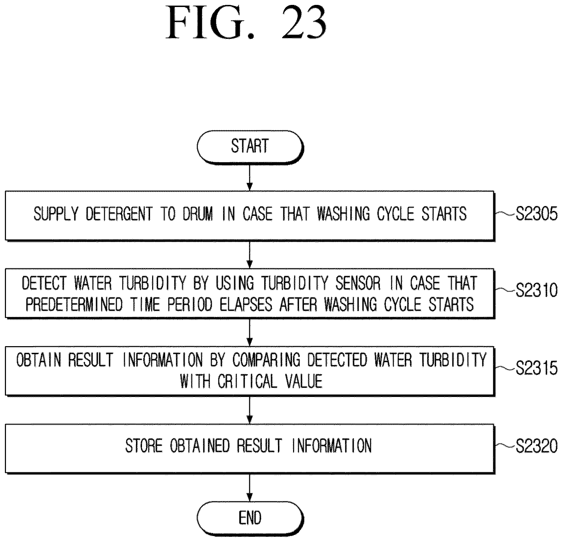

FIG. 23 is a flowchart for explaining a control method for a washing machine 100 according to another embodiment of the present disclosure.

Referring to FIG. 23, the control method of the washing machine 100 which includes a drum 110, a detergent supply unit 120, and a turbidity sensor 130, may include: controlling the detergent supply unit 120 to supply detergent to the drum 110 in case that a washing cycle starts (S2305); detecting water turbidity by using the turbidity sensor 130 in case that a predetermined time period elapses after the washing cycle starts (S2310); obtaining result information by comparing the detected water turbidity with a critical value (S2315); and storing the obtained result information (S2320).

Meanwhile, the control method may further include: obtaining a first number, which is the number of the washing cycles having the detected water turbidity less than the critical value, based on the result information in case that a user input for performing the washing cycle is received; and adjusting a supply amount of detergent provided using the detergent supply unit 120 in case that the first number is a critical number or more.

Meanwhile, the control method may further include: performing a first washing cycle by supplying a first amount of detergent by using the detergent supply unit 120 in case that the first number is the critical number or more; and detecting the water turbidity by using the turbidity sensor 130 after the predetermined time period elapses after the first washing cycle starts.

Meanwhile, the control method may further include: ending the first washing cycle and counting the first washing cycle to update the first number in case that the water turbidity is less than the critical value; and performing a second washing cycle by supplying a second amount of detergent by using the detergent supply unit 120 and counting the second washing cycle to update a second number which is the number of washing cycles having the detected water turbidity of the critical value or more in case that the water turbidity is the critical value or more.

Meanwhile, the control method may further include performing a third washing cycle by supplying a third amount of detergent by using the detergent supply unit 120 in case that the first number is less than the critical number.

Meanwhile, the control method may further include: ending the first washing cycle in case that the water turbidity is less than the first critical value; performing the second washing cycle by supplying the second amount of detergent by using the detergent supply unit 120 in case that the water turbidity is the first critical value or more and less than a second critical value; and performing a fourth washing cycle by supplying a fourth amount of detergent by using the detergent supply unit 120 in case that the water turbidity is the second critical value or more.

Meanwhile, the control method may further include: ending the first washing cycle in case that the water turbidity is less than the first critical value; performing the second washing cycle by supplying the second amount of detergent by using the detergent supply unit 120 in case that the water turbidity is the first critical value or more and less than the second critical value; and performing a fifth washing cycle by supplying the second amount of detergent and a fifth amount of detergent by using the detergent supply unit 120 in case that the water turbidity is the second critical value or more, wherein the fifth amount of detergent is a detergent different from the first amount of detergent or the second amount of detergent.

Meanwhile, the control method may further include: performing a first rinsing cycle after the first washing cycle ends in case that the water turbidity is less than the critical value; and performing a second rinsing cycle after the second washing cycle ends in case that the water turbidity is the critical value or more.

Meanwhile, the control method may further include: re-detecting the water turbidity by using the turbidity sensor 130 in case that the second washing cycle ends; and providing a guide user interface (UI) for performing an additional washing cycle in case that the re-detected turbidity is the critical value or more.

Meanwhile, the control method may further include: sensing at least one of a laundry weight, a laundry volume, a temperature, or a humidity; obtaining a probability value for the first washing cycle from an artificial intelligence model by inputting at least one of the laundry weight, the laundry volume, the temperature, or the humidity into the artificial intelligence model stored in the washing machine 100; and identifying the washing cycle of the washing machine 100 as being performed in a predetermined pattern in case that the obtained probability value is a critical probability value or more, wherein the artificial intelligence model is trained based on a washing cycle history of a plurality of users that includes history information related to the cycle performed by the washing machine 100 and a first number ratio for each of the plurality of users.

Meanwhile, the control method of the washing machine 100 as shown in FIG. 23 may be performed by the washing machine having the configuration of FIG. 1 or 2, and may also be performed by a washing machine having another configuration.

Meanwhile, the methods according to the various embodiments of the present disclosure described above may be implemented in the form of an application which may be installed on a conventional washing machine.

In addition, the method according to the various embodiments of the present disclosure described above may be implemented only by software upgrade or hardware upgrade for the conventional washing machine.

In addition, the various embodiments of the present disclosure described above may be performed through an embedded server included in the washing machine, or an external server of at least one of the washing machine and a display device.

Meanwhile, according to an embodiment of the present disclosure, the various embodiments described above may be implemented by software including an instruction stored in a machine-readable storage medium (for example, a computer-readable storage medium). A machine may be an apparatus that invokes the stored instruction from the storage medium and may be operated based on the invoked instruction, and may include the washing machine according to the disclosed embodiments. In case that the instruction is executed by the processor, the processor may directly perform a function corresponding to the instruction, or other components may perform the function corresponding to the instruction under control of the processor. The instruction may include a code disposed or executed by a compiler or an interpreter. The machine-readable storage medium may be disposed in the form of a non-transitory storage medium. Here, the term "non-transitory" indicates that the storage medium is tangible without including a signal, and does not distinguish whether data are semi-permanently or temporarily stored in the storage medium.

In addition, according to an embodiment of the present disclosure, the method according to the various embodiments described above may be disposed by being included in a computer program product. The computer program product may be traded as a product between a seller and a purchaser. The computer program product may be distributed in a form of the machine-readable storage medium (for example, a compact disc read only memory (CD-ROM)), or may be distributed online through an application store (for example, PlayStore^{™}). In case of the online distribution, at least some of the computer program products may be at least temporarily stored in a storage medium such as a memory of a server of a manufacturer, a server of an application store, or a relay server, or be temporarily generated.

In addition, each of the components (for example, modules or programs) according to the various embodiments described above may include a single entity or a plurality of entities, and some of the corresponding sub-components described above may be omitted or other sub-components may be further included in the various embodiments. Alternatively or additionally, some of the components (e.g., modules or programs) may be integrated into one entity, and may perform functions performed by the respective corresponding components before being integrated in the same or similar manner. Operations performed by the modules, the programs or other components according to the various embodiments may be executed in a sequential manner, a parallel manner, an iterative manner or a heuristic manner, at least some of the operations may be performed in a different order or be omitted, or other operations may be added.

Although the embodiments are shown and described in the present disclosure as above, the present disclosure is not limited to the above-mentioned specific embodiments, and may be variously modified by those skilled in the art to which the present disclosure pertains without departing from the gist of the present disclosure as claimed in the accompanying claims. These modifications should also be understood to fall within the scope and spirit of the present disclosure.

## Claims

1. A washing machine comprising:
a drum;
a detergent supply unit configured to supply detergent to the drum;
a turbidity sensor configured to detect turbidity of water in the drum;
a memory; and
a processor configured to
control the detergent supply unit to supply the detergent to the drum in case that a washing cycle starts,
detect the water turbidity by using the turbidity sensor in case that a predetermined time period elapses after the washing cycle starts,
obtain result information by comparing the detected water turbidity with a critical value, and
store the obtained result information in the memory.

2. The washing machine of claim 1, wherein the processor is configured to
obtain a first number, which is the number of washing cycles having the detected water turbidity less than the critical value, based on the result information, in case of receiving a user input for performing the washing cycle, and
adjust a supply amount of detergent provided using the detergent supply unit in case that the first number is a critical number or more.

3. The washing machine of claim 2, wherein the processor is configured to
perform a first washing cycle by supplying a first amount of detergent by using the detergent supply unit in case that the first number is the critical number or more, and
detect the water turbidity by using the turbidity sensor after the predetermined time period elapses after the first washing cycle starts.

4. The washing machine of claim 3, wherein the processor is configured to
end the first washing cycle and count the first washing cycle to update the first number in case that the water turbidity is less than the critical value, and
perform a second washing cycle by supplying a second amount of detergent by using the detergent supply unit and count the second washing cycle to update a second number which is the number of washing cycles having the detected water turbidity of the critical value or more in case that the water turbidity is the critical value or more.

5. The washing machine of claim 2, wherein the processor is configured to perform a third washing cycle by supplying a third amount of detergent by using the detergent supply unit in case that the first number is less than the critical number.

6. The washing machine of claim 4, wherein the processor is configured to
end the first washing cycle in case that the water turbidity is less than a first critical value,
perform the second washing cycle by supplying the second amount of detergent by using the detergent supply unit in case that the water turbidity is the first critical value or more and less than a second critical value, and
perform a fourth washing cycle by supplying a fourth amount of detergent by using the detergent supply unit in case that the water turbidity is the second critical value or more.

7. The washing machine of claim 4, wherein the processor is configured to
end the first washing cycle in case that the water turbidity is less than the first critical value,
perform the second washing cycle by supplying the second amount of detergent by using the detergent supply unit in case that the water turbidity is the first critical value or more and less than the second critical value, and
perform a fifth washing cycle by supplying the second amount of detergent and a fifth amount of detergent by using the detergent supply unit in case that the water turbidity is the second critical value or more, and
the fifth amount of detergent is a detergent different from the first amount of detergent or the second amount of detergent.

8. The washing machine of claim 4, wherein the processor is configured to
perform a first rinsing cycle after ending the first washing cycle in case that the water turbidity is less than the critical value, and
perform a second rinsing cycle after ending the second washing cycle in case that the water turbidity is the critical value or more.

9. The washing machine of claim 4, wherein the processor is configured to
re-detect the water turbidity by using the turbidity sensor in case that the second washing cycle ends, and
provide a guide user interface (UI) for performing an additional washing cycle in case that the re-detected turbidity is the critical value or more.

10. The washing machine of claim 1, wherein the processor is configured to
sense at least one of a laundry weight, a laundry volume, a temperature, or a humidity,
obtain a probability value for the first washing cycle from an artificial intelligence model by inputting at least one of the laundry weight, the laundry volume, the temperature, or the humidity into the artificial intelligence model stored in the memory, and
identify the washing cycle of the washing machine as being performed in a predetermined pattern in case that the obtained probability value is a critical probability value or more, and
the artificial intelligence model is trained based on a washing cycle history of a plurality of users that includes history information related to the cycle performed by the washing machine and a first number ratio for each of the plurality of users.

11. A control method for a washing machine which includes a drum, a detergent supply unit, and a turbidity sensor, the method comprising:
controlling the detergent supply unit to supply detergent to the drum in case that a washing cycle starts;
detecting water turbidity by using the turbidity sensor in case that a predetermined time period elapses after the washing cycle starts;
obtaining result information by comparing the detected water turbidity with a critical value; and
storing the obtained result information.

12. The method of claim 11, further comprising:
obtaining a first number, which is the number of washing cycles having the detected water turbidity less than the critical value, based on the result information, in case that a user input for performing the washing cycle is input; and
adjusting a supply amount of detergent provided using the detergent supply unit in case that the first number is a critical number or more.

13. The method of claim 12, further comprising:
performing a first washing cycle by supplying a first amount of detergent by using the detergent supply unit in case that the first number is the critical number or more; and
detecting the water turbidity by using the turbidity sensor after the predetermined time period elapses after the first washing cycle starts.

14. The method of claim 13, further comprising:
ending the first washing cycle and counting the first washing cycle to update the first number in case that the water turbidity is less than the critical value; and
performing a second washing cycle by supplying a second amount of detergent by using the detergent supply unit and counting the second washing cycle to update a second number which is the number of washing cycles having the detected water turbidity of the critical value or more in case that the water turbidity is the critical value or more.

15. The method of claim 12, further comprising performing a third washing cycle by supplying a third amount of detergent by using the detergent supply unit in case that the first number is less than the critical number.
